# EUROPEAN PATENT APPLICATION

(11) **EP 4 727 091 A1**
(43) Date of publication of application: **15.04.2026**
(21) Application number: 25211878.1
(22) Date of filing: 05.01.2023
(51) Int. Cl.: H04L 67/52, G06F 16/958, G06F 9/451

(54) **PRE-CACHING METHOD, USER INTERFACE, AND ELECTRONIC DEVICE**

(30) Priority: 20.01.2022 CN 202210065370
(62) Divisional of application: 23742699.4
(71) Applicant: HUAWEI TECHNOLOGIES CO., LTD., Shenzhen, Guangdong 518129 (CN)
(72) Inventor: WU, Guoliang, Shenzhen, Guangdong, 518129 (CN); ZHANG, Yunji, Shenzhen, Guangdong, 518129 (CN); SHU, Haw-Wei, Shenzhen, Guangdong, 518129 (CN)
(74) Representative: Maiwald GmbH

(57) **Abstract**

This application discloses a pre-caching method, a user interface, and an electronic device. The method includes: The electronic device obtains itinerary information, and pre-caches, based on the itinerary information, multimedia content before a user travels, or pre-caches a part of the multimedia content when the user travels, to ensure that the electronic device can play the cached multimedia content smoothly when the user passes through a road section whose network signal strength is weak during travel. In this way, the user can be freed from being affected by a network signal when watching the multimedia content, and an entertainment requirement of the user during travel can be met.

## Description

This application claims priority to Chinese Patent Application No. 202210065370.8, filed with the China National Intellectual Property Administration on January 20, 2022 and entitled "PRE-CACHING METHOD, USER INTERFACE, AND ELECTRONIC DEVICE", which is incorporated herein by reference in its entirety.

### TECHNICAL FIELD

This application relates to the fields of terminals and communication technologies, and in particular, to a pre-caching method, a user interface, and an electronic device.

### BACKGROUND

With development of the Internet, more users prefer to obtain multimedia content, including news, articles, music, movies, and TV series, through the Internet. However, in some special cases, for example, on a flight or a high-speed train, compromising network signal reception prevents users from obtaining multimedia content in real time to meet user entertainment requirements, only to deteriorate user experience. Therefore, how to meet user entertainment requirements despite poor or even no network signal reception is an urgent problem to be resolved currently.

### SUMMARY

This application provides a pre-caching method, a user interface, and an electronic device. In the pre-caching method, multimedia content can be pre-cached before a user travels. This frees the user from being affected by network signal reception when watching the multimedia content during travel, and meets an entertainment requirement of the user during travel.

According to a first aspect, an embodiment of this application provides a pre-caching method. The method includes: An electronic device obtains itinerary information; the electronic device determines first duration based on the itinerary information; the electronic device obtains and stores first content based on the first duration; and the electronic device displays a first user interface, where the first user interface includes a first option corresponding to the first content, and the first option is used to perform an operation on the first content.

According to the method provided in the first aspect, the electronic device may pre-cache multimedia content with specific duration based on itinerary information of a user, and display an option corresponding to the multimedia content after the multimedia content is cached, to ensure that the user can trigger, via the option, watching of the pre-cached multimedia content during travel. This frees an entertainment requirement of the user from being affected by network signal fluctuation during the travel, and provides better travel experience for the user.

With reference to the first aspect, in an implementation, that the electronic device determines first duration based on the itinerary information specifically includes: The electronic device determines travel duration of the user based on the itinerary information; and the electronic device determines the first duration based on the travel duration.

In other words, the electronic device may determine, based on the travel duration of the user, cache duration of the multimedia content to be cached. For example, when the user has two-hour flight travel, the electronic device may pre-cache two hours of multimedia content. In this way, it can be ensured that there is multimedia content that can be watched offline even if the user enables an airplane mode during flight travel.

With reference to the first aspect, in an implementation, that the electronic device determines first duration based on the itinerary information specifically includes: The electronic device determines a travel road section of the user based on the itinerary information; the electronic device determines, from the travel road section, a first road section whose network signal strength is less than a first threshold; and the electronic device determines the first duration for the user to pass through the first road section.

In other words, the electronic device may predict, based on network signal strength at geographical locations during travel of the user, network unavailable duration that may exist during travel of the user. For example, when the user has two-hour train travel, because a train passes through a tunnel during the travel, there is one hour of network unavailable duration. Therefore, the electronic device may pre-cache one hour of multimedia content. In this way, the user can normally use the electronic device with good signal reception, and watch the pre-cached video offline when moving to a road section with poor network signal reception. This meets an entertainment requirement of the user during the travel.

With reference to the first aspect, in an implementation, before the electronic device determines, from the travel road section, the first road section whose network signal strength is less than the first threshold, the method further includes: The electronic device sends the itinerary information to a server; and the electronic device receives the network signal strength that is of the travel road section and that is sent by the server. That the electronic device determines, from the travel road section, a first road section whose network signal strength is less than a first threshold specifically includes: The electronic device determines, from the travel road section based on the network signal strength of the travel road section and the first threshold, the first road section whose network signal strength is less than the first threshold.

In this embodiment of this application, the electronic device may obtain the network signal strength at the geographical locations during the travel by using the server, and determine, based on the network signal strength, a road section with a poor network during the travel, to specifically determine the cache duration of the multimedia content to be cached by the electronic device.

In addition, the server is configured to store the network signal strength at the geographical locations, and the server may receive network signal strength that is at different geographical locations and that is collected by a plurality of devices, to supplement and improve network signal strength that is at a plurality of geographical locations and that is stored by the server.

With reference to the first aspect, in an implementation, the method further includes: The electronic device determines a travel time of the user based on the itinerary information. That the electronic device determines the first duration for the user to pass through the first road section includes: The electronic device determines the first duration for the user to pass through the first road section within the travel time.

When the user travels at different times, time duration spent by the user on passing through a same route may be different. For example, time duration spent by the user on passing through a route to work during peak hours differs greatly from time duration spent by the user on passing through the route to work on a rest day. Therefore, when determining the network unavailable duration, the electronic device may further determine the network unavailable duration based on the travel time, to improve accuracy of duration of the multimedia content cached by the electronic device.

With reference to the first aspect, in an implementation, the method further includes: The electronic device displays the first content when receiving a first operation performed on the first option or when detecting that the electronic device is in a preset state.

In other words, the electronic device may play the multimedia content when receiving an operation of playing the multimedia content by the user or when detecting that the electronic device is in a travel scenario. The travel scenario may be determined based on a location or an altitude at which the electronic device is located, network signal strength of the electronic device, whether the airplane mode is enabled on the electronic device, or the like. For example, when the electronic device detects that a current location is on a travel route of the user, the electronic device may automatically display a playing interface of the multimedia content and start to play the multimedia content, so that the user can conveniently perform operations for more intelligent travel experience.

With reference to the first aspect, in an implementation, before the electronic device obtains the itinerary information, the method further includes: The electronic device displays a second user interface that is provided by a settings application and that includes a second option; and the electronic device receives a second operation performed on the second option, where the second operation is used to trigger the electronic device to obtain the itinerary information and store the first content.

The electronic device may enable or disable, by using the settings application, an intelligent cache function of pre-caching the multimedia content by the electronic device based on the itinerary information. In this way, the user may determine, based on a requirement of the user, whether the electronic device needs to be allowed to automatically cache the multimedia content before the travel. This improves user operability.

With reference to the first aspect, in an implementation, the method further includes: The electronic device removes the first content from storage space after the electronic device detects a third operation or the electronic device detects that the electronic device arrives at a destination; and the electronic device displays prompt information, where the prompt information indicates that the electronic device already removes the first content from the storage space.

In other words, the electronic device may delete the pre-cached multimedia content after detecting an operation of deleting the multimedia content by the user or after detecting that the travel of the user ends, to free the multimedia content from occupying the storage space of the electronic device for a long time.

With reference to the first aspect, in an implementation, that the electronic device obtains and stores first content based on the first duration specifically includes: when a network status meets a preset condition, the electronic device obtains and stores the first content based on the first duration, where the preset condition includes: network signal strength of the electronic device is greater than a second threshold, and/or a network type of the electronic device is a first type.

The first type may be a Wi-Fi network type. In other words, the electronic device may determine, based on the network status, when to start caching the multimedia content. The electronic device may start caching the multimedia content during good network signal reception. This can ensure that the electronic device completes caching the multimedia content as soon as possible in a short time, and free a cache of the multimedia content from occupying excessive system resources. The electronic device may alternatively start caching the multimedia content when the network type is the Wi-Fi network type. This can free the cache of the multimedia content from consuming a mobile network traffic tariff.

In general, when to cache the multimedia content is determined based on the network status, so that the electronic device can start caching the multimedia content in a specific case. Therefore, pre-caching of the multimedia content is more intelligent.

With reference to the first aspect, in an implementation, the method further includes: The electronic device displays a third user interface, where the third user interface is used to set a condition of the network status; the electronic device receives a fourth operation performed on the third user interface; and the electronic device obtains the preset condition in response to the fourth operation.

A specific preset condition for starting caching the multimedia content may be determined by the user, and the electronic device may control the caching of the multimedia content by using the condition of the network status set by the user.

With reference to the first aspect, in an implementation, the first content is determined based on historical behavior data on the electronic device.

The historical behavior data may be a historical browsing record in a video playing application. In other words, the electronic device may determine a preference of the user based on a video browsing status of the user in the video playing application, and therefore determine, based on the preference of the user, the multimedia content to be cached.

With reference to the first aspect, in an implementation, that an electronic device obtains itinerary information specifically includes: The electronic device obtains the itinerary information provided by a first application, where the first application includes an itinerary application, an SMS application, and a memo application.

According to a second aspect, an embodiment of this application provides a pre-caching method. The method includes: An electronic device obtains itinerary information, where the itinerary information indicates a travel road section of a user; the electronic device outputs, at a first location on the travel road section, a first part of first content online; the electronic device determines network signal strength of a first road section following the first location from the travel road section, where the first road section starts from the first location; when the network signal strength of the first road section is less than a first threshold, the electronic device stores a second part of the first content, where the second part is determined based on duration for the user to pass through the first road section; and the electronic device outputs the second part of the first content after outputting the first part of the first content.

According to the method provided in the second aspect, the electronic device may determine, during travel of the user and online playing of multimedia content based on a network signal status of a road section in front of the user, whether a second half of the currently played multimedia content needs to be pre-cached. This ensures that when the user moves to a road section ahead with poor network signal reception, frame freezing or a playing failure does not occur during playing of the multimedia content.

With reference to the second aspect, in an implementation, that the electronic device determines network signal strength of a first road section following the first location from the travel road section specifically includes: The electronic device sends a first request to a server, where the first request is used to request to obtain the network signal strength of the first road section; and the electronic device receives the network signal strength that is of the first road section and that is sent by the server.

In other words, the electronic device may obtain the network signal strength of the travel road section ahead by using the server, therefore determine network unavailable duration based on the road section with poor network signal reception, and determine duration of the multimedia content that needs to be pre-cached.

With reference to the second aspect, in an implementation, the itinerary information further includes a travel time of the user, and duration of the second part is determined based on the duration for the user to pass through the first road section within the travel time.

When the user travels at different times, time duration spent by the user on passing through a same route may be different. For example, time duration spent by the user on passing through a route to work during peak hours differs greatly from time duration spent by the user on passing through the route to work on a rest day. Therefore, when determining the network unavailable duration, the electronic device may further determine the network unavailable duration based on the travel time, to improve accuracy of duration of the multimedia content cached by the electronic device.

With reference to the second aspect, in an implementation, before the electronic device obtains the itinerary information, the method further includes: The electronic device displays a first user interface that is provided by a settings application and that includes a first option; and the electronic device receives a first operation performed on a first option, where the first operation is used to trigger the electronic device to obtain the itinerary information and store the second part of the first content.

The electronic device may enable or disable, by using the settings application, an intelligent cache function of pre-caching the multimedia content by the electronic device based on the itinerary information. In this way, the user may determine, based on a requirement of the user, whether the electronic device needs to be allowed to automatically cache the multimedia content during the travel. This improves user operability.

With reference to the second aspect, in an implementation, that an electronic device obtains itinerary information specifically includes: The electronic device obtains the itinerary information provided by a first application, where the first application includes an itinerary application, an SMS application, and a memo application.

According to a third aspect, an embodiment of this application provides an electronic device, including a display, a memory, and one or more processors. The display and the memory are coupled to the one or more processors, the memory is configured to store computer program code, the computer program code includes computer instructions, and the one or more processors invoke the computer instructions to enable the electronic device to perform the following operations: A first application of the electronic device obtains itinerary information; a second application of the electronic device determines first duration based on the itinerary information; the second application of the electronic device obtains and stores first content based on the first duration; and the electronic device displays a first user interface, where the first user interface includes a first option corresponding to the first content, and the first option is used to perform an operation on the first content.

In an embodiment of this application, the electronic device may complete pre-caching the multimedia content through interaction between the first application and the second application. The first application may be represented as an application that can be installed on the electronic device, or presented to the user in a form of a leftmost screen, or presented to the user in a form of a widget. When the first application is represented as an application that can be installed on the electronic device, the first application may be a smart assistant application or a settings application, and the second application may be a video play application.

The first application may determine, based on the itinerary information, cache duration of the multimedia content to be cached, and the second application may cache the multimedia content based on the cache duration. In this way, it can be ensured that the user can watch the pre-cached multimedia content during travel, to free an entertainment requirement of the user from being affected by network signal fluctuation during the travel, and provide better travel experience for the user.

With reference to the third aspect, in an implementation, the one or more processors are specifically configured to invoke the computer instructions, so that the electronic device performs the following operations: The first application of the electronic device determines travel duration of a user based on the itinerary information; and the first application of the electronic device determines the first duration based on the travel duration.

In other words, the first application may determine, based on the travel duration of the user, the cache duration of the multimedia content to be cached. For example, when the user has two-hour flight travel, the electronic device may pre-cache two hours of multimedia content by using the first application. In this way, it can be ensured that there is multimedia content that can be watched offline even if the user enables an airplane mode during flight travel.

With reference to the third aspect, in an implementation, the one or more processors are specifically configured to invoke the computer instructions, so that the electronic device performs the following operations: The first application of the electronic device determines a travel road section of the user based on the itinerary information; the first application of the electronic device determines, from the travel road section, a first road section whose network signal strength is less than a first threshold; and the first application of the electronic device determines the first duration for the user to pass through the first road section.

In other words, the first application may predict, based on network signal strength at geographical locations during travel of the user, network unavailable duration that may exist during travel of the user. For example, when the user has two-hour train travel, because a train passes through a tunnel during the travel, there is one hour of network unavailable duration. Therefore, the electronic device may pre-cache one hour of multimedia content. In this way, the user can normally use the electronic device with good signal reception, and watch the pre-cached video offline when moving to a road section with poor network signal reception. This meets an entertainment requirement of the user during the travel.

With reference to the third aspect, in an implementation, the one or more processors are further configured to invoke the computer instructions, so that the electronic device performs the following operations: Before the first application of the electronic device determines the first road section, the first application of the electronic device sends the itinerary information to a server; and the first application of the electronic device receives the network signal strength that is of the travel road section and that is sent by the server. The one or more processors are specifically configured to invoke the computer instructions, so that the electronic device performs the following operation: The first application of the electronic device determines, from the travel road section based on the network signal strength of the travel road section and the first threshold, the first road section whose network signal strength is less than the first threshold.

In an embodiment of this application, the first application may obtain the network signal strength at the geographical locations during the travel by using the server, and determine, based on the network signal strength, a road section with a poor network during the travel, to specifically determine the cache duration of the multimedia content to be cached by the second application.

In addition, the server is configured to store the network signal strength at the geographical locations, and the server may receive network signal strength that is at different geographical locations and that is collected by a plurality of devices, to supplement and improve the network signal strength that is at a plurality of geographical locations and that is stored by the server.

With reference to the third aspect, in an implementation, the one or more processors are further configured to invoke the computer instructions, so that the electronic device performs the following operation: The first application of the electronic device determines a travel time of the user based on the itinerary information. The one or more processors are specifically configured to invoke the computer instructions, so that the electronic device performs the following operation: The first application of the electronic device determines the first duration for the user to pass through the first road section within the travel time.

When the user travels at different times, time duration spent by the user on passing through a same route may be different. For example, time duration spent by the user on passing through a route to work during peak hours differs greatly from time duration spent by the user on passing through the route to work on a rest day. Therefore, when determining the network unavailable duration, the first application may further determine the network unavailable duration based on the travel time, to improve accuracy of duration of the multimedia content cached by the electronic device.

With reference to the third aspect, in an implementation, the one or more processors are further configured to invoke the computer instructions, so that the electronic device performs the following operation: The second application of the electronic device displays the first content when receiving a first operation performed on the first option or when detecting that the electronic device is in a preset state.

In other words, the electronic device may play the multimedia content when receiving an operation of playing the multimedia content by the user or when detecting that the electronic device is in a travel scenario. The travel scenario may be determined based on a location or an altitude at which the electronic device is located, network signal strength of the electronic device, whether the airplane mode is enabled on the electronic device, or the like. For example, when the electronic device detects that a current location is on a travel route of the user, the electronic device may automatically display a playing interface of the multimedia content and start to play the multimedia content, so that the user conveniently performs operations for more intelligent travel experience.

With reference to the third aspect, in an implementation, the one or more processors are further configured to invoke the computer instructions, so that the electronic device performs the following operations: Before the first application of the electronic device obtains the itinerary information, the electronic device displays a second user interface that is provided by the settings application and that includes a second option, and receives a second operation performed on the second option, where the second operation is used to trigger the electronic device to obtain the itinerary information and store the first content.

The electronic device may enable or disable, by using the settings application, an intelligent cache function of pre-caching the multimedia content by the electronic device based on the itinerary information. In this way, the user may determine, based on a requirement of the user, whether the electronic device needs to be allowed to automatically cache the multimedia content before the travel. This improves user operability.

With reference to the third aspect, in an implementation, the one or more processors are further configured to invoke the computer instructions, so that the electronic device performs the following operations: The first application of the electronic device removes the first content from storage space after the first application of the electronic device detects a third operation or the first application of the electronic device detects that the electronic device arrives at a destination; and the first application of the electronic device displays prompt information, where the prompt information indicates that the electronic device already removes the first content from the storage space.

In other words, the first application may delete the pre-cached multimedia content after detecting an operation of deleting the multimedia content by the user or after detecting that the travel of the user ends, to free the multimedia content from occupying the storage space of the electronic device for a long time.

With reference to the third aspect, in an implementation, the one or more processors are specifically configured to invoke the computer instructions, so that the electronic device performs the following operation: When a network status meets a preset condition, the second application of the electronic device obtains and stores the first content based on the first duration, where the preset condition includes: network signal strength of the electronic device is greater than a second threshold, and/or a network type of the electronic device is a first type.

The first type may be a Wi-Fi network type. In other words, the first application may determine, based on the network status, when to start caching the multimedia content. The electronic device may control the second application to start caching the multimedia content during good network signal reception. This can ensure that the electronic device completes caching the multimedia content as soon as possible in a short time, and free a cache of the multimedia content from occupying excessive system resources. The electronic device may alternatively control the second application to start caching the multimedia content when the network type is the Wi-Fi network type. This can free the cache of the multimedia content from consuming a mobile network traffic tariff.

In general, when to cache the multimedia content is determined based on the network status, so that the electronic device can start caching the multimedia content in a specific case. Therefore, pre-caching of the multimedia content is more intelligent.

With reference to the third aspect, in an implementation, the one or more processors are further configured to invoke the computer instructions, so that the electronic device performs the following operations: The first application of the electronic device displays a third user interface, where the third user interface is used to set a condition of the network status; the first application of the electronic device receives a fourth operation performed on the third user interface; and the first application of the electronic device obtains the preset condition in response to the fourth operation.

A specific preset condition for starting caching the multimedia content may be determined by the user, and the first application may control the caching of the multimedia content by using the condition of the network status set by the user.

With reference to the third aspect, in an implementation, the first content is determined based on historical behavior data on the electronic device.

The historical behavior data may be a historical browsing record in a video playing application. In other words, the second application may determine a preference of the user based on a video browsing status of the user in the video playing application, and therefore determine, based on the preference of the user, the multimedia content to be cached.

With reference to the third aspect, in an implementation, the one or more processors are specifically configured to invoke the computer instructions, so that the electronic device performs the following operation: The first application of the electronic device obtains the itinerary information provided by a third application, where the third application includes an itinerary application, an SMS application, and a memo application.

According to a fourth aspect, an embodiment of this application provides an electronic device, including a display, a memory, and one or more processors. The display and the memory are coupled to the one or more processors, the memory is configured to store computer program code, the computer program code includes computer instructions, and the one or more processors invoke the computer instructions, so that the electronic device performs the following operations: A first application of the electronic device obtains itinerary information, where the itinerary information indicates a travel road section of a user; a second application of the electronic device outputs, at a first location on the travel road section, a first part of first content online; the first application of the electronic device determines network signal strength of a first road section following the first location from the travel road section, where the first road section starts from the first location; when the network signal strength of the first road section is less than a first threshold, the second application of the electronic device caches a second part of the first content, where the second part is determined based on duration for the user to pass through the first road section; and the second application of the electronic device outputs the second part of the first content after outputting the first part of the first content.

In an embodiment of this application, the electronic device may complete caching while playing the multimedia content through interaction between the first application and the second application. The first application may be represented as an application that can be installed on the electronic device, or presented to the user in a form of a leftmost screen, or presented to the user in a form of a widget. When the first application is represented as an application that can be installed on the electronic device, the first application may be a smart assistant application or a settings application, and the second application may be a video play application.

The first application may determine, during travel of the user and online playing of multimedia content based on a network signal status of a road section in front of the user, whether the second application needs to be controlled to pre-cache a second half of the currently played multimedia content. This ensures that when the user moves to a road section ahead with poor network signal reception, frame freezing or a playing failure does not occur during playing of the multimedia content.

With reference to the fourth aspect, in an implementation, the one or more processors are specifically configured to invoke the computer instructions, so that the electronic device performs the following operations: The first application of the electronic device sends a first request to a server, where the first request is used to request to obtain the network signal strength of the first road section; and the first application of the electronic device receives the network signal strength that is of the first road section and that is sent by the server.

In other words, the first application may obtain the network signal strength of the travel road section ahead by using the server, therefore determine network unavailable duration based on the road section with poor network signal reception, and determine duration of the multimedia content that needs to be pre-cached.

With reference to the fourth aspect, in an implementation, the itinerary information further includes a travel time of the user, and duration of the second part is determined based on the duration for the user to pass through the first road section within the travel time.

When the user travels at different times, time duration spent by the user on passing through a same route may be different. For example, time duration spent by the user on passing through a route to work during peak hours differs greatly from time duration spent by the user on passing through the route to work on a rest day. Therefore, when determining the network unavailable duration, the first application may further determine the network unavailable duration based on the travel time, to improve accuracy of duration of the multimedia content cached by the electronic device.

With reference to the fourth aspect, in an implementation, the one or more processors are specifically configured to invoke the computer instructions, so that the electronic device performs the following operations: Before the first application of the electronic device obtains the itinerary information, the electronic device displays a first user interface that is provided by the first application and that includes a first option; and the first application of the electronic device receives a first operation performed on the first option, where the first operation is used to trigger the electronic device to obtain the itinerary information and cache the second part of the first content.

The electronic device may enable or disable, by using the settings application, an intelligent cache function of pre-caching the multimedia content by the electronic device based on the itinerary information. In this way, the user may determine, based on a requirement of the user, whether the second application needs to be allowed to automatically cache the multimedia content during the travel. This improves user operability.

With reference to the fourth aspect, in an implementation, the one or more processors are specifically configured to invoke the computer instructions, so that the electronic device performs the following operation: The first application of the electronic device obtains the itinerary information provided by a third application, where the third application includes an itinerary application, an SMS application, and a memo application.

According to a fifth aspect, an embodiment of this application provides a computer-readable storage medium, including instructions. When the instructions are run on an electronic device, the electronic device is enabled to perform the method according to any one of the first aspect or the implementations of the first aspect or any one of the second aspect or the implementations of the second aspect.

According to a sixth aspect, an embodiment of this application provides a computer program product. When the computer program product runs on a computer, the computer is enabled to perform the method according to any one of the first aspect or the implementations of the first aspect or any one of the second aspect or the implementations of the second aspect.

According to the technical solutions provided in embodiments of this application, an electronic device may pre-cache multimedia content before a user travels, or pre-cache a part of the multimedia content when the user travels, to ensure that the electronic device can play the cached multimedia content smoothly when the user passes through a road section whose network signal strength is weak during travel. This provides more intelligent travel experience for the user.

### BRIEF DESCRIPTION OF DRAWINGS

FIG. 1 is a diagram of a hardware structure of an electronic device according to an embodiment of this application;
FIG. 2 is a diagram of a software structure of an electronic device according to an embodiment of this application;
FIG. 3 is a schematic flowchart of a pre-caching method according to an embodiment of this application;
FIG. 4A to FIG. 4D are diagrams of some user interfaces according to an embodiment of this application;
FIG. 5A to FIG. 5E are diagrams of some user interfaces according to an embodiment of this application; and
FIG. 6A to FIG. 6D are diagrams of some user interfaces according to an embodiment of this application.

### DESCRIPTION OF EMBODIMENTS

The technical solutions according to embodiments of this application are clearly described in the following with reference to the accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

With development of the Internet, multimedia content like news, articles, music, movies, and TV series can be obtained through an electronic device like a mobile phone and a tablet. However, when a user is in a travel scenario like a flight or a high-speed train, the electronic device may not able to obtain the multimedia content in real time due to poor or even no network signal reception. In this case, multimedia content that can be provided by the electronic device is quite limited. Consequently, an entertainment requirement of the user cannot be met.

To meet the entertainment requirement of the user despite poor or even no network signal reception, the user may manually pre-cache the multimedia content during good network signa reception, to ensure that the user can carry out entertainment activities such as reading news, reading articles, listening to music, and watching movies and TV series despite poor or even no network signal reception. However, it needs to take time and efforts of the user to manually cache the multimedia content in advance, and the user may forget to pre-cache the multimedia content when the user is busy. As a result, the entertainment requirement of the user is still not met. Therefore, how to pre-cache the multimedia content is an urgent problem to be resolved currently.

An embodiment of this application provides a pre-caching method. The method includes: An electronic device obtains itinerary information of a user, determines, based on the itinerary information, a road section with poor network signal reception during travel of the user, determines a cache size of multimedia content based on time duration spent by the user on passing through the road section, and before or during the travel of the user, initiates a cache request carrying the cache size to a multimedia application. After receiving the cache request, the multimedia application may start caching specified multimedia content. In this way, the electronic device may automatically pre-cache the multimedia content based on an itinerary of the user before arriving at the road section with poor network signal reception, to ensure that an entertainment requirement of the user during the travel is not affected by network signal reception. This improves user experience.

The electronic device may determine the itinerary information of the user by using information of an application like an itinerary application, an SMS application, or a memo application, where the itinerary information of the user indicates travel-related information of the user, including but not limited to a start time, an end time, a start location, an end location, and a travel route of the travel of the user, a transportation means taken by the user, and the like.

In some embodiments, the electronic device may further obtain a network status of the electronic device, and determine, based on the network status, whether to initiate the cache request to the multimedia application, or when to send the cache request to the multimedia application. The network status may include a network type and network signal strength that are used by the electronic device. The network type may include but is not limited to two types: a wireless fidelity (wireless fidelity, Wi-Fi) network and a mobile network. The electronic device may determine, based on the network status, whether to cache the multimedia content currently. For example, the electronic device may temporarily not cache the multimedia content during poor network signal reception, and start caching the multimedia content during good network signal reception. The user chooses to refuse to cache the multimedia content when the electronic device uses the mobile network, and the electronic device starts to cache the multimedia content when detecting that the network status is the Wi-Fi network. This can avoid that the electronic device spends excessively long time duration on caching the multimedia content during poor network signal reception, reduce power consumption of the electronic device, and improve efficiency of caching the multimedia content, or avoid consumption of a mobile network traffic tariff to cache the multimedia content. For specific descriptions of determining, by the electronic device based on the network status, whether to cache the multimedia content, refer to subsequent content. Details are not described herein again.

In some embodiments, the electronic device may determine, based on a preference of the user, multimedia content to be cached. In other words, the electronic device may determine specified multimedia content based on a historical browsing record of the user for the multimedia content. Movies and TV series are used as an example. If the electronic device detects that the user browses science fiction movies for a largest quantity of times, the electronic device may specify the science fiction movies as the multimedia content to be cached. In this way, the specified multimedia content is selected based on the preference of the user, which can reduce troubles that the user performs manual selection, ensure that the cached multimedia content is content preferred by the user, and provide the user with a more personalized and intelligent service for caching the multimedia content.

It should be noted that, in embodiments of this application, that the electronic device caches the multimedia content may be understood as that the electronic device obtains and stores the multimedia content. In addition, further, after the itinerary ends, the electronic device automatically clears the stored multimedia content, to release storage space occupied by the multimedia content.

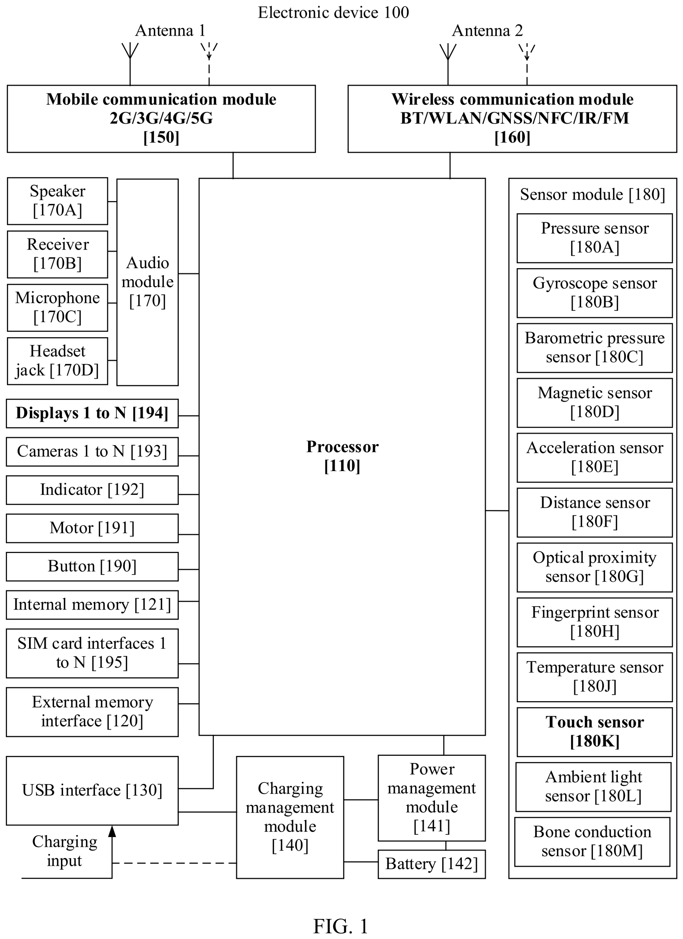

FIG. 1 is a diagram of a hardware structure of an electronic device 100.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. A memory may be further disposed in the processor 110, and is configured to store instructions and data.

In some embodiments, the processor 110 may be configured to obtain itinerary information of a user, determine, based on the itinerary information, a cache size of multimedia content to be cached, determine, based on a network status, whether to send a cache request to the multimedia application, and specify the multimedia content to be cached based on a preference of the user.

The power management module 141 is configured to connect to the battery 142, the charging management module 140, and the processor 110.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network.

The mobile communication module 150 may provide a solution to wireless communication that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the mobile communication module 150 and the wireless communication module 160 may be configured to: obtain the network status of the user, and when the multimedia application receives the cache request, obtain the multimedia content by using a server corresponding to the multimedia application, so as to complete caching of the multimedia content.

The electronic device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. In some embodiments, the electronic device may include one or N displays 194, where N is a positive integer greater than 1.

In some embodiments, the display 194 may be configured to display the multimedia content and a user interface related to the multimedia content. For specific descriptions of the user interface, refer to subsequent UI embodiments. Details are not described herein again.

The electronic device 100 may implement a photographing function by using the ISP, the camera 193, the video codec, the GPU, the display 194, the application processor, and the like.

The ISP is configured to process data fed back by the camera 193.

The camera 193 is configured to capture a static image or a video.

The digital signal processor is configured to process a digital signal, and may process another digital signal in addition to a digital image signal.

The video codec is configured to compress or decompress a digital video.

The NPU is a neural-network (neural-network, NN) computing processor, and quickly processes input information by referring to a structure of a biological neural network, for example, a transfer mode between human brain neurons, and may further continuously perform self-learning.

The internal memory 121 may include one or more random access memories (random access memory, RAM) and one or more non-volatile memories (non-volatile memory, NVM).

The external memory interface 120 may be configured to connect to an external non-volatile memory, to expand a storage capability of the electronic device 100. The external non-volatile memory communicates with the processor 110 through the external memory interface 120, to implement a data storage function. For example, files such as music and videos are stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal.

The speaker 170A, also referred to as a "loudspeaker", is configured to convert an electrical audio signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal.

The gyroscope sensor 180B may be configured to determine a moving posture of the electronic device 100.

The barometric pressure sensor 180C is configured to measure barometric pressure.

The magnetic sensor 180D includes a Hall sensor. The electronic device 100 may detect opening and closing of a flip cover by using the magnetic sensor 180D.

The acceleration sensor 180E may detect accelerations in various directions (usually on three axes) of the electronic device 100.

The distance sensor 180F is configured to measure a distance.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving.

The ambient light sensor 180L is configured to sense ambient light brightness.

The fingerprint sensor 180H is configured to collect a fingerprint.

The temperature sensor 180J is configured to detect a temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K.

In some embodiments, the touch sensor 180K may be configured to detect a user operation, for example, a tap operation performed on the display 194. The user operation may be used to trigger display or play of multimedia content, or the like.

The bone conduction sensor 180M may obtain a vibration signal.

The button 190 includes a power button, a volume button, and the like.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

The electronic device may be a portable terminal device carrying iOS, Android, Microsoft, or another operating system, for example, a mobile phone, a tablet computer, or a wearable device; or may be a non-portable terminal device such as a laptop (Laptop) having a touch-sensitive surface or a touch panel, or a desktop computer having a touch-sensitive surface or a touch panel. A software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100.

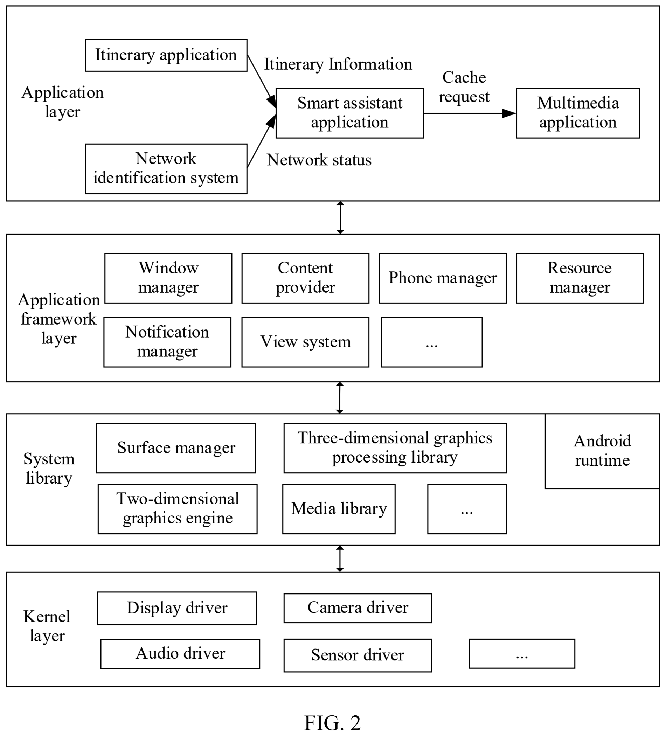

FIG. 2 is a diagram of a software structure of the electronic device 100 according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as an itinerary application, a network identification system, a smart assistant application, and a multimedia application.

The itinerary application may be used to provide a travel service for a user. The user may book a travel ticket, arrange a travel plan, learn travel information, or the like by using the itinerary application. In this embodiment of this application, the itinerary application may be used to provide itinerary information for the smart assistant application.

The network identification system may be configured to obtain a network status, where the network status includes a network type and network signal strength. The network type includes but is not limited to two types: a Wi-Fi network and a mobile network. The mobile network is a wide area network, for example, a 2G/3G/4G/5G network, that needs to be constructed, maintained, and operated by an operator. The Wi-Fi network uses a local area network technology that can connect terminals in a wireless manner, and can convert a wired network signal into a wireless signal for electronic devices such as a mobile phone, a tablet, and a computer that support the technology to receive. The network identification system may send the network status to the smart assistant application, so that the smart assistant application determines, based on the network status, whether to send a cache request to the multimedia application.

The smart assistant application may be configured to send, to the multimedia application based on the itinerary information of the user, the cache request for caching the multimedia content. Specifically, the smart assistant application can obtain the itinerary information provided by the itinerary application, determine a cache size of the multimedia content based on the itinerary information, obtain the network status provided by the network identification system, and determine, based on the network status, whether to send the cache request to the multimedia application.

The multimedia application may be configured to provide the multimedia content for the user, and provide entertainment services such as reading news, reading articles, listening to music, or watching movies and TV series for the user. The multimedia content may be a text, an audio, a video, or the like. For example, the multimedia application may be an application like a music player or a video player. In this embodiment of this application, the multimedia application may receive the cache request sent by the smart assistant application, and start caching the multimedia content based on the cache request.

It may be understood that, in embodiments of this application, the application layer is not limited to the application package mentioned above. The itinerary application may be further replaced with another application that can provide itinerary information, for example, an SMS application or a memo application. The smart assistant application may be further replaced with a settings application, and the settings application includes all functions mentioned in the foregoing smart assistant application. In addition, a name of the application package mentioned above is not limited in embodiments of this application.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG4, H.264, MP3, AAC, AMR, JPG and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It may be understood that, in embodiments of this application, the smart assistant application may provide a visualized user interface for the user in a form of a system application or a third-party application, or may provide a visualized user interface for the user in a leftmost screen manner, or may be presented to the user in a form of a widget. In other words, the electronic device may detect an operation performed by the user on an icon of the smart assistant application displayed on a desktop, and display a user interface provided by the smart assistant application. The user may manage an intelligent cache function through the user interface, view a cache status of the multimedia content, and the like. Alternatively, the electronic device may detect a user operation of expanding the leftmost screen by the user, and display a setting item related to the intelligent cache function, the cache status of the multimedia content, and the like in the leftmost screen. Alternatively, the smart assistant application may be a function in an application, and the electronic device may detect a user operation performed by the user on the function included in the application, and manage the intelligent cache function. This is not limited in embodiments of this application.

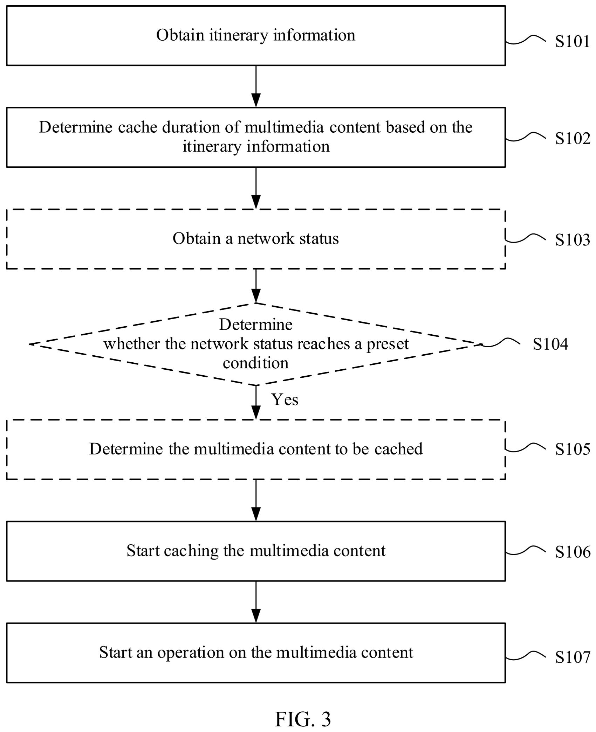

FIG. 3 is a schematic flowchart of a pre-caching method according to an embodiment of this application. The pre-caching method provided in embodiments of this application is described with reference to FIG. 3.

S101: An electronic device 100 obtains itinerary information.

The itinerary information indicates travel-related information of a user, including but not limited to a start time, an end time, a start location, an end location, and a travel route of travel of the user, a transportation means taken by the user, and the like. For a specific description of an itinerary application, refer to the foregoing related content. Details are not described herein again. The electronic device may determine, based on the itinerary information, one or more of the following information: travel duration of the user, a travel route of the user, a travel time of the user, and the like.

Manners for the electronic device 100 to obtain the itinerary information include but are not limited to the following two manners.
(1) The electronic device 100 obtains the itinerary information by using an application.

The application may be an application that can provide the itinerary information, for example, an itinerary application, an SMS application, or a memo application. When the application is an itinerary application, the itinerary application may provide the user with a ticket booking function. After the user completes ticket booking by using the itinerary application, the itinerary application may determine the itinerary information of the user based on ticket information. When the application is an SMS application, the electronic device 100 may obtain the itinerary information by using an SMS message related to the travel in the SMS application. In this way, the electronic device 100 can automatically obtain the itinerary information of the user by using information of the application. This facilitates an operation of the user.

(2) The electronic device 100 obtains the itinerary information by using information input by the user.

Specifically, the electronic device 100 may provide an input option for the user to actively fill in the itinerary information of the user. In this way, the user can actively input the itinerary information to the electronic device 100 when multimedia content needs to be pre-cached, so that the electronic device 100 caches the multimedia content based on the itinerary information.

In embodiments of this application, the electronic device 100 may obtain the itinerary information of the user by using the itinerary application. Specifically, the electronic device may obtain, by using a smart assistant application, the itinerary information provided by the itinerary application. The itinerary application may actively send the itinerary information to the smart assistant application, or the smart assistant application may invoke the itinerary information of the itinerary application.

A triggering occasion for the electronic device 100 to obtain the itinerary information includes but is not limited to the following manners:
Manner 1: After detecting an operation of enabling an intelligent cache function by the user, the electronic device 100 may trigger obtaining of the itinerary information in response to the operation.

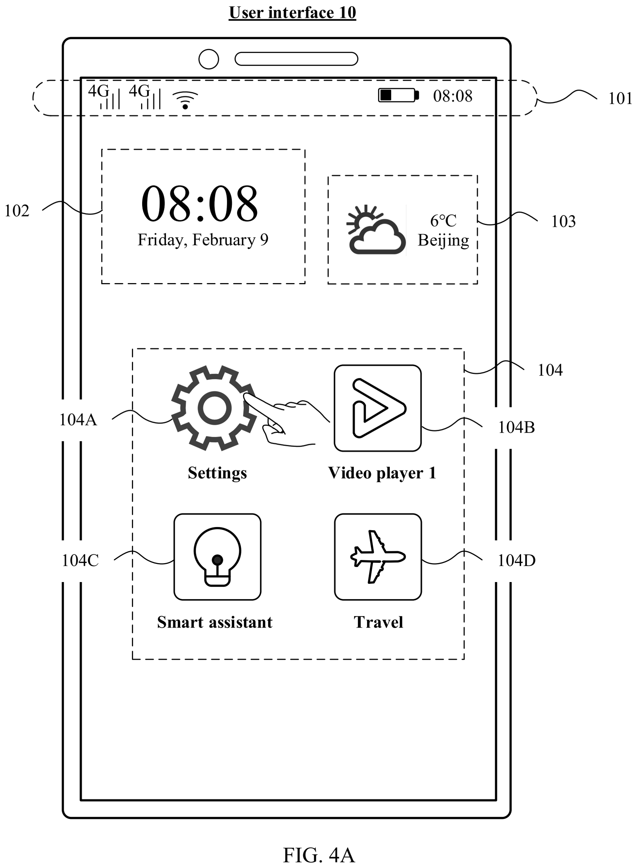

For example, the electronic device 100 may enable the intelligent cache function by using a settings application. FIG. 4A to FIG. 4D show examples of some user interfaces involved when the intelligent cache function is set by using the electronic device 100.

FIG. 4A shows an example of a user interface 10 used for an application menu on the electronic device 100. As shown in FIG. 4A, the user interface 10 may include a status bar 101, a calendar indicator 102, a weather indicator 103, and an application list 104.

The status bar 101 may include one or more signal strength indicators of a mobile network signal, one or more signal strength indicators of a Wi-Fi signal, a battery status indicator, and a time indicator. The calendar indicator 102 may indicate a current time. The weather indicator 103 may indicate a weather type. The application list 104 may be used to display one or more applications. As shown in FIG. 4A, the application list 104 may include a settings icon 104A, a video player 1 icon 104B, a smart assistant icon 104C, and a travel icon 104D. The settings icon 104A may be used to start the settings application, the video player 1 icon 104B may be used to start a video player 1 application, the smart assistant icon 104C may be used to start the smart assistant application, and the travel icon 104D may be used to start a travel application. The settings application may include a function of the smart assistant application, the travel application is an itinerary application, and the video player 1 application is a multimedia application. For specific descriptions related to the smart assistant application, the itinerary application, and the multimedia application, refer to the foregoing content. Details are not described herein again. The application list 104 may include more or fewer application icons. This is not limited in embodiments of this application.

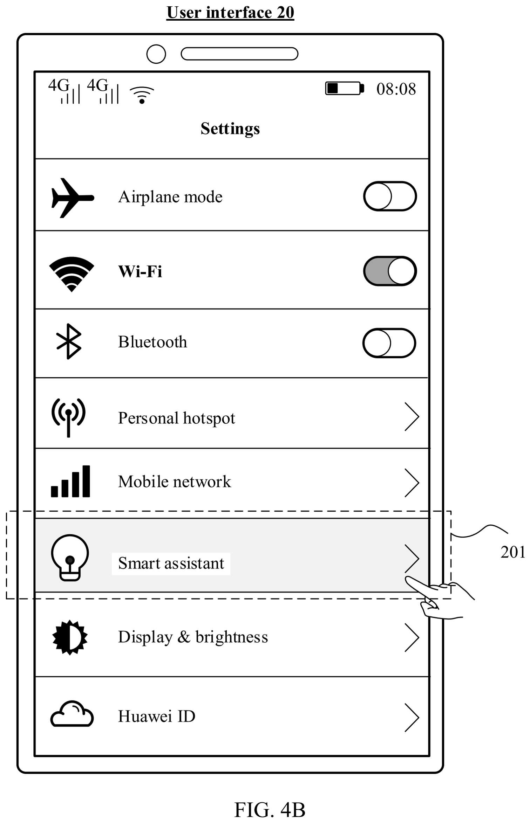

As shown in FIG. 4A, the electronic device 100 may detect a user operation performed on the settings icon 104A, and display a user interface 20 shown in FIG. 4B in response to the user operation. The user interface 20 may be a default user interface provided by the settings application.

As shown in FIG. 4B, the user interface 20 may include a plurality of function options such as Airplane mode, Wi-Fi, Bluetooth, Hotspot, and Mobile network. The electronic device 100 may detect touch operations performed by the user on different function options on the user interface 20, and in response to the operations, the electronic device 100 may enable or disable functions such as the airplane mode, the Wi-Fi, the Bluetooth, the hotspot, and the mobile network.

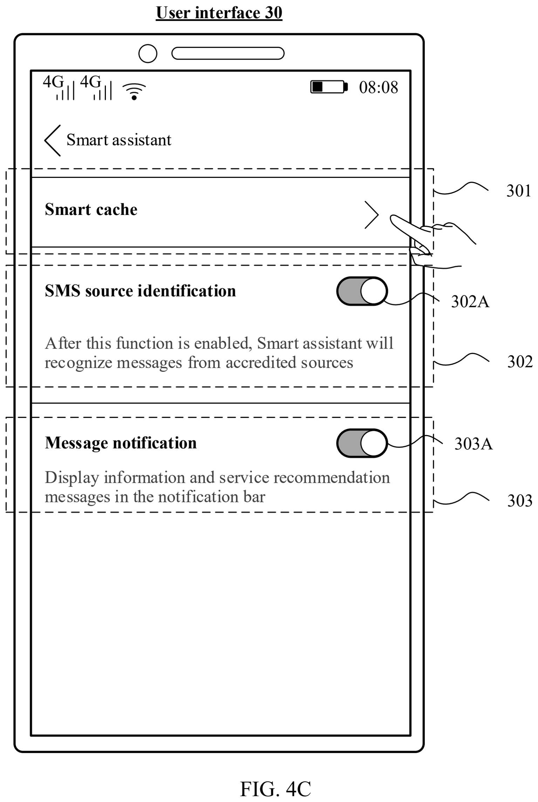

The user interface 20 may include a "Smart assistant" option 201. The "Smart assistant" option 201 may be used to enable and disable the intelligent cache function, and the intelligent cache function may implement pre-caching of the multimedia content based on the itinerary information of the user. As shown in FIG. 4B, the electronic device 100 may detect a user operation performed on the "Smart assistant" option 201, and display a user interface 30 shown in FIG. 4C in response to the operation.

As shown in FIG. 4C, the user interface 30 may include a first option 301, a second option 302, and a third option 303. The first option 301 may be used to further set a configuration related to the intelligent cache function, and the second option 302 may be used to set whether to obtain the itinerary information by using an SMS message. The second option 302 includes a switch 302A. The switch 302A may detect a user operation, and enable or disable SMS source identification in response to the user operation. The third option 303 may be used to set whether to display a notification of the smart assistant in a notification bar. The third option 303 includes a switch 303A. The switch 303A may detect a user operation, and enable or disable a message notification in response to the user operation. For example, when a main color displayed on the switch 302A or the switch 303A is white, the switch is in an off state, and when the main color is dark, the switch is in an on state.

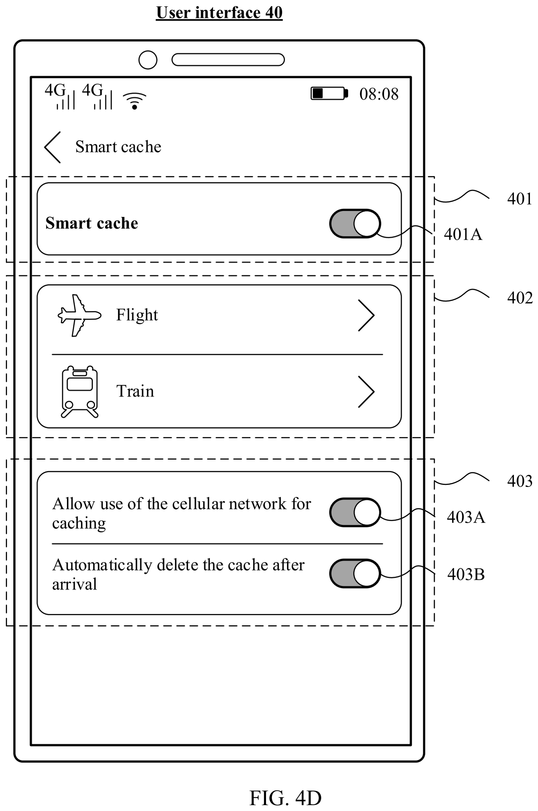

When the electronic device 100 detects a user operation performed on the first option 301, in response to the operation, the electronic device 100 displays a user interface 40 shown in FIG. 4D.

As shown in FIG. 4D, the user interface 40 may include a "Smart cache" option 401, a travel option 402, and a configuration option 403.

The "Smart cache" option 401 includes a switch 401A. The switch 401A may detect a user operation, and enable or disable the intelligent cache function in response to the user operation. As shown in FIG. 4D, if the switch 401A is in an on state, the electronic device 100 may obtain the itinerary information, and cache the multimedia content based on the itinerary information.

The travel option 402 may be used by the user to manage and view the itinerary information obtained by the electronic device 100. The itinerary information may be classified and managed based on a transportation means used for travel. For example, the travel option 402 may list one or more travel sub-options based on a transportation means like a flight or a train, including sub-options such as a flight and a train. The one or more sub-options may detect an operation of the user, and display itinerary information of the user for a transportation means corresponding to the sub-option, for example, a start time, an end time, a start location, and an end location of travel of the user.

The configuration option 403 may be used to enable or disable a configuration related to the intelligent cache function, for example, a configuration like whether to allow to use a cellular network for caching and whether to automatically delete a cache after arrival. The configuration option 403 may include a switch 403A and a switch 403B. The switch 403A may detect a user operation, and in response to the user operation, allow or not allow to use the cellular network (namely, a mobile network) for caching. When use of the cellular network for caching is allowed, the electronic device 100 may start caching the multimedia content when the network status is the mobile network. When use of the cellular network for caching is not allowed, the electronic device 100 may start caching the multimedia content when the network status is the Wi-Fi network. In this way, it may be set that use of the cellular network for caching is not allowed, to reduce a cache of the multimedia content and use of cellular traffic. The switch 403B may also detect a user operation, and in response to the user operation, delete or not delete the cached multimedia content when the user arrives at a destination. In this way, it may be set that the cache is automatically deleted after arrival, to reduce storage space occupied by the multimedia content in the electronic device 100.

It may be understood that the travel option 402 may further include sub-options such as a ferry, a subway, a high-speed train, a bus, and an online car-hailing vehicle, and the configuration option 403 may further include another configuration related to the intelligent cache function. This is not limited in embodiments of this application.

It can be learned from FIG. 4A to FIG. 4D that, the electronic device 100 may enable or disable the intelligent cache function by using the settings application, and set the configuration related to the intelligent cache function. The intelligent cache function may be used to pre-cache the multimedia content based on the itinerary information of the user.

It may be understood that the foregoing setting of the intelligent cache function by using the settings application is not limited. In embodiments of this application, the electronic device may alternatively set the intelligent cache function in another manner, for example, by using the smart assistant application.

Manner 2: After detecting that an application generates the itinerary information or information related to the itinerary information, the electronic device 100 may trigger obtaining of the itinerary information.

Manner 3: After detecting an operation of triggering playing of the multimedia content by the user, the electronic device 100 may trigger obtaining of the itinerary information in response to the operation.

In some embodiments, the electronic device 100 may display the itinerary information on a user interface after obtaining the itinerary information. In this way, the user can conveniently view an itinerary of the user by using the electronic device 100.

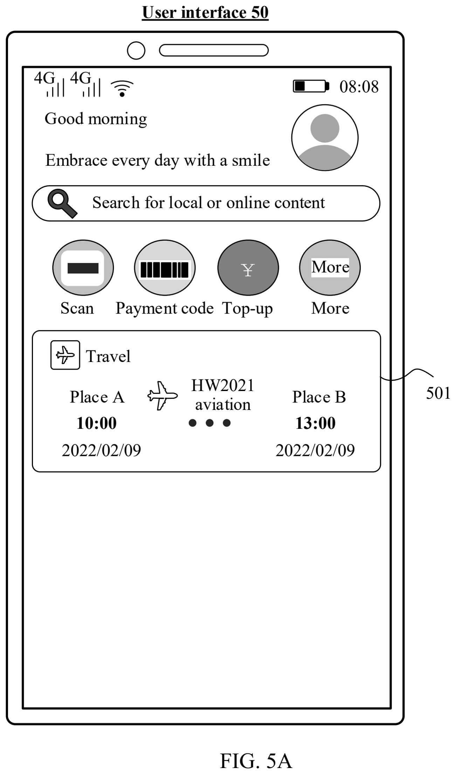

For example, FIG. 5A shows an example of a leftmost screen user interface 50 on the electronic device 100. For example, when displaying the user interface 10 shown in FIG. 4A, the electronic device 100 may detect an operation of sliding rightward by the user, and display the user interface 50 shown in FIG. 5A in response to the operation. The user interface 50 may be used to display a list of events such as a travel memo, a to-do schedule, and weather that are automatically generated by the electronic device 100, and one or more shortcut function icons, so that the user can quickly browse and manage the events, and quickly use one or more functions. This provides a more intelligent and convenient service for the user.

As shown in FIG. 5A, the user interface 50 may include a plurality of shortcut function icons such as Scan, Payment code, Mobile top-up, and More. The electronic device 100 may detect touch operations performed by the user on the plurality of shortcut function icons, and in response to the operations, activate a scanning function, display payment code, activate mobile top-up, display more functions, or the like. In addition, the user interface 50 may further display one or more notification items, for example, a first notification bar 501 shown in FIG. 5A. The first notification bar 501 may be a notification message provided by the travel application, and the first notification bar 501 may be used to display itinerary information of travel reserved by the user on the travel application. It can be learned from the first notification bar 501 that a start time of the travel is 10:00, an end time is 13:00, a start location is "Place A", an end location is "Place B", and a transportation means used for the travel is a flight.

It should be noted that the itinerary information displayed in the first notification bar 501 may be provided by the smart assistant application or the settings application in addition to the travel application. This is not limited in embodiments of this application.

S102: The electronic device 100 determines cache duration of the multimedia content based on the itinerary information.

In embodiments of this application, the multimedia content may include one or more of the following: a video, an audio, a text, and the like. When the multimedia content is a video or an audio, a cache size of the multimedia content may include but is not limited to the cache duration and a caching quantity of the multimedia content. When the multimedia content is a text, the cache size of the multimedia content may be a quantity of words, a quantity of pages, or the like. The cache size of the multimedia content is specifically determined by a length of a network unavailable time period, namely, duration of the network unavailable time period, during the travel of the user. To be specific, longer network unavailable duration indicates a larger cache size of the multimedia content, and shorter network unavailable duration indicates a smaller cache size of the multimedia content.

When the electronic device 100 determines the cache size of the multimedia content, the following three travel scenarios are mainly involved.

Travel scenario 1: There is no network or poor network signal reception during the entire travel.

For example, the travel scenario 1 may be a scenario in which the user travels by taking a flight. This is because the user generally needs to set the electronic device 100 to the airplane mode when taking a flight, and the electronic device 100 is always in a network unavailable state during a flight journey.

Therefore, in the travel scenario 1, the network unavailable duration is travel duration of the user. The electronic device 100 may determine the travel duration of the user based on the itinerary information, and determine the cache duration of the multimedia content based on the travel duration. The travel duration is duration of an interval between the start time and the end time of the travel of the user. For example, the cache duration of the multimedia content may be greater than or equal to the travel duration. In other words, the electronic device 100 may pre-cache multimedia content applicable to an entire travel process of the user, to ensure that there is multimedia content that can be watched offline or listened to offline in the entire travel process of the user.

During specific implementation, the electronic device 100 may determine the cache duration of the multimedia content by using the smart assistant application. Specifically, the smart assistant application may determine the travel duration of the user based on the start time and the end time of the travel of the user in the itinerary information, and determine the cache size of the multimedia content based on the travel duration. For example, the multimedia content is a video. When the itinerary information obtained by the electronic device 100 indicates that the user has a two-hour flight itinerary, the network unavailable time period is a flight time period of the flight, and the electronic device 100 may determine that duration of a video to be cached is two hours.

Travel scenario 2: During the travel, there is no network or poor network signal reception for a long time on a travel road section.

For example, the travel scenario 2 may be a scenario in which the user travels by taking a train. This is because in a process in which the user takes the train, the train may pass through a road section with compromising network signal reception, for example, a tunnel. As a result, there is poor or even no network signal reception on the electronic device 100 for a long time on only a part of the travel road section.

Therefore, in the travel scenario 2, the network unavailable duration is less than the travel duration of the user, and the network unavailable duration is duration spent when the user passes through a road section whose network signal strength is less than a threshold (for example, a first threshold) in the travel route. In other words, the electronic device 100 may determine the cache duration of the multimedia content based on a network status on the travel route of the user, and pre-cache multimedia content that is applicable only to a road section with poor or even no network reception, to ensure that when the user passes through a road section on which the network is unavailable during travel, the user can watch or listen to the pre-cached multimedia content.

The electronic device 100 may determine the network signal strength of the travel route by using a server 200. Specifically, the electronic device 100 may send the itinerary information to the server 200. The server 200 determines the network signal strength of the travel route of the user based on the itinerary information, and sends the network signal strength of the travel route to the electronic device 100. Then, the electronic device 100 determines, based on the network signal strength of the travel route, the network unavailable duration when the user travels, and determines the cache duration of the multimedia content based on the network unavailable duration.

The server 200 may be configured to store network signal strength at geographical locations. The server 200 may collect network signal strength at geographical locations at which a plurality of electronic devices are located in a moving process, to obtain the network signal strength at the plurality of geographical locations. In this way, when the electronic device requests to obtain network signal strength at a target geographical location from the server 200, the server 200 may obtain, through screening, the network signal strength at the target geographical location from the stored network signal strength at the plurality of geographical locations. The geographical location may be represented as a geographical range, a route, a coordinate point, or the like. A representation form of the geographical location is not limited in embodiments of this application. The network signal strength may be represented as a value of the network signal strength, and the value may be a signal strength value of a base station or a wireless access point collected by the electronic device. Alternatively, the network signal strength may be represented as a network signal level. A higher level indicates a better network signal at the geographical location, and a lower level indicates a weaker network signal at the geographical location. A representation form of the network signal strength is not limited in embodiments of this application.

It may be understood that the server 200 may further obtain network signal strength at different geographical locations by using the base station, another server, or the like. A manner in which the server 200 obtains the network signal strength at different geographical locations is not limited in embodiments of this application.

Specifically, the server 200 may determine, based on the itinerary information, a route through which the user needs to pass during this travel, and find, from the stored network signal strength at the plurality of geographical locations, network signal strength at geographical locations on the route, so that the electronic device 100 can predict, based on the network signal strength of the route, the network unavailable duration during the travel of the user, and therefore pre-cache multimedia content with a corresponding size.

During specific implementation, the electronic device 100 may determine the cache duration of the multimedia content by using the smart assistant application. Specifically, after obtaining the itinerary information, the smart assistant application may send the itinerary information to the server 200, where the itinerary information indicates the travel route. Then, the server 200 determines the network signal strength of the travel route based on the itinerary information, and sends the network signal strength of the travel route to the electronic device 100. Then, the smart assistant application determines, based on the network status on the travel route, the network unavailable duration during the travel of the user, and determines the cache size of the multimedia content based on the network unavailable duration.

For example, when the multimedia content is a video, and the electronic device 100 determines that the user is in a state of poor or even no network signal reception in one of two hours of the travel, the electronic device 100 may pre-cache a video of one hour or about one hour. In this way, the user can normally use the electronic device 100 with good signal reception, and watch the pre-cached video offline when moving to a road section with poor network signal reception. This meets an entertainment requirement of the user during the travel.

It may be understood that the network unavailable duration is time duration spent by the user on passing through a road section with a poor network in the travel route. Preferably, the network unavailable duration is time duration spent by the user on passing through a road section with a poor network in the travel route within the travel time. This is because when the user travels at different times, time duration spent by the user on passing through a same route may be different. For example, time duration spent by the user on passing through a route to work during morning peak hours differs greatly from time duration spent by the user on passing through the route to work on a rest day. Therefore, when determining the network unavailable duration, the electronic device 100 may further determine the network unavailable duration based on the travel time indicated by the itinerary information.

Travel scenario 3: During the travel, there is no network or poor network signal reception for a short time on the travel route.

For example, the travel scenario 3 may be a scenario in which the user travels by taking a transportation means like a high-speed train, a subway, or a light rail. This is because when the user travels by taking the transportation means like the high-speed train, the subway, or the light rail, the signal reception of the electronic device 100 may be unstable due to obstacle blocking in a fast moving process. In this case, although the user can watch or listen to the multimedia content online, frame freezing may occur during playing of the multimedia content.

Therefore, in the travel scenario 3, the network unavailable time period may include a plurality of dispersive time periods, and during the travel, total network unavailable duration is less than the travel duration of the user. In this case, the electronic device 100 may cache, while playing the multimedia content during the travel of the user, a part that is of the multimedia content and that is not played, to ensure that the multimedia content output by the electronic device 100 is not affected by network signal reception during the travel.

Specifically, when the electronic device 100 outputs a first part of the multimedia content and the user is in the travel process, the electronic device 100 may determine, in advance based on a network status on a road section subsequent to a current location of the user, duration of a second part of the multimedia content to be cached subsequently. Cache duration of the second part is determined by a length of a subsequent road section with poor network signal reception. A longer length of the road section indicates longer duration of the multimedia content to be cached, and a shorter length of the road section indicates shorter duration of the multimedia content to be cached.

The multimedia content may be divided into a plurality of parts, including but not limited to the first part, the second part, and a third part. That the multimedia application outputs the first part of the multimedia content online means that the multimedia application plays or displays the first part of the multimedia content while obtaining data of the first part of the multimedia content from the multimedia application server through the network. In addition, when the multimedia application outputs the first part of the multimedia content online, the user is in the travel, for example, the user is at a first location on the travel route.

In other words, the electronic device 100 may play only a part of content (for example, the first part) of the multimedia content online during the travel of the user, determine, in a process of playing the content, network signal strength of the road section subsequent to the current location of the user, and determine, based on the network signal strength of the subsequent road section, whether a second half (for example, the second part) of the multimedia content needs to be pre-cached, and a size of the second half to be cached. The electronic device 100 may cache the second half of the multimedia content when the network signal strength of the subsequent road section is lower than a threshold (for example, the first threshold). In this way, it can be ensured that when the user moves to a road section ahead on which the network is poor or missing, frame freezing or a playing failure does not occur during playing of the multimedia content.

The electronic device 100 may obtain the network signal strength of the subsequent road section by using the server 200. Specifically, the electronic device 100 may send a request (for example, a first request) to the server 200, where the request is used to request to obtain the network signal strength of the subsequent road section. The server 200 returns the queried network signal strength of the subsequent road section to the electronic device 100. For specific descriptions of the server 200, refer to the foregoing content. Details are not described herein again.

During specific implementation, the electronic device 100 may determine the cache duration of the multimedia content by using the smart assistant application. Specifically, in a process in which the multimedia application plays the first part of the multimedia content and the electronic device 100 is in a travel scenario, the smart assistant application may obtain network signal strength of a travel road section subsequent to a current location of the electronic device 100, that is, send, to the server 200, indication information for requesting to obtain the network signal strength of the subsequent travel road section.

When the network on the subsequent road section is poor, it indicates that when the electronic device 100 moves to the road section, the multimedia application cannot play the multimedia content online, or frame freezing occurs during online playing of the multimedia content. In this case, before the electronic device 100 moves to the road section, the smart assistant application may predetermine a part of content of the multimedia content to be cached, to ensure that the electronic device 100 can normally play the multimedia content when moving to the road section.

It should be noted that when the network on the subsequent road section is good, it indicates that when the electronic device 100 moves to the road section, the multimedia application can normally play the multimedia content online. Therefore, the multimedia application does not need to pre-cache the other part of the multimedia content, and may play the part of the multimedia content online when the user moves to the road section.

It may be understood that, in a process in which the user is in a travel scenario and the multimedia application continuously outputs the multimedia content, the smart assistant application may continue to obtain, based on the itinerary information, network signal strength of a travel route subsequent to the current location of the user, and continue to determine, based on the network signal strength, whether multimedia content (for example, the third part of the multimedia content) after a current output progress needs to be pre-cached.

It should be noted that, when the multimedia content is a text, cached content of the multimedia content is represented as a quantity of words, a quantity of pages, or the like. In this case, the electronic device 100 may determine the quantity of cached words or the quantity of cached pages of the multimedia content based on a reading speed of the user and the cache duration of the multimedia content.

In addition, in a process in which the electronic device determines the cache duration of the multimedia content based on the itinerary information, the electronic device may further determine a cache upper limit of the multimedia content, and a size of the multimedia content cached by the electronic device needs to be less than the cache upper limit. In this way, when the electronic device caches the multimedia content, the cached multimedia content can be freed from occupying excessive storage space.

In embodiments of this application, the cached multimedia content may also be referred to as first content, and the cache duration of the first content may also be referred to as first duration.

S103: The electronic device 100 obtains the network status.

The network status may include a network type and network signal strength that are used by the electronic device. The network type may include but is not limited to two types: a wireless fidelity (wireless fidelity, Wi-Fi) network and a mobile network.

After the electronic device 100 determines the cache size of the multimedia content, the electronic device 100 may determine, based on the network status, when to start caching the multimedia content. Specifically, the electronic device 100 may start caching the multimedia content when the network status reaches a preset configuration. For example, the electronic device 100 may start caching the multimedia content when the network signal strength reaches a threshold (for example, a second threshold). Alternatively, the electronic device 100 may start caching the multimedia content when the network type is the Wi-Fi network. The preset configuration may be a configuration prestored in the electronic device 100, or may be a configuration set by the user. Therefore, before the electronic device 100 starts caching the multimedia content, the electronic device 100 may request to obtain a current network status, and determine whether to start caching the multimedia content currently.

In other words, before the electronic device 100 caches the multimedia content, the electronic device 100 may view the current network status, and determine, based on the network status, whether to cache the multimedia content currently. In this way, the electronic device 100 can start caching the multimedia content in a specific case. Therefore, pre-caching of the multimedia content is more intelligent.

During specific implementation, the electronic device 100 may determine the network status by using a network identification system. Specifically, the electronic device 100 may send a request for obtaining the network status to the network identification system by using the smart assistant application. The network identification system may obtain the network status of the electronic device 100 by using the mobile communication module 150 and the wireless communication module 160 in the electronic device 100, and send the network status to the smart assistant application.

S104: The electronic device 100 determines whether the network status reaches a preset condition.

The preset configuration may include preset network signal strength and/or a preset network type. Specifically, when determining that current network signal strength reaches the preset network signal strength, and/or a current network type is the preset network type, the electronic device 100 starts caching the multimedia content.

During specific implementation, after the smart assistant application obtains the network status, the electronic device 100 may determine, by using the smart assistant application, whether the network status reaches the preset condition.

The preset condition may be a configuration preset by the electronic device 100, or may be a configuration set by the user. For example, as shown in FIG. 4D, the user interface 40 includes the switch 403A. The switch 403A may detect a user operation, and in response to the user operation, allow or not allow to use the cellular network for caching. In other words, the user may determine the preset network type by controlling the switch 403A.

It may be understood that step S103 and step S104 are optional steps. In other words, the electronic device 100 may directly start caching the multimedia content after determining the cache size of the multimedia content without considering impact of the network status on caching of the multimedia content; start caching the multimedia content after receiving an operation of starting caching by the user; or the like. This is not limited in embodiments of this application.

S105: The electronic device 100 determines the multimedia content to be cached.

Specifically, the electronic device 100 may determine, based on a historical browsing record of the user for the multimedia content and the cache duration determined by the electronic device 100, the multimedia content to be cached for the user. The electronic device 100 may select, as the multimedia content to be cached, multimedia content of a type that is historically browsed by the user for a largest quantity of times. In this way, the electronic device 100 may cache specified multimedia content based on a preference of the user, so that the cached multimedia content is content that is of interest to the user as much as possible. Alternatively, further, the electronic device 100 may further determine, based on the cache upper limit of the multimedia content, the multimedia content to be cached for the user, to free the multimedia content cached by the electronic device 100 from occupying excessive storage space.

It may be understood that step S105 is an optional step. In other words, the electronic device 100 may not specify the multimedia content based on the preference of the user. In this case, the electronic device 100 may randomly determine the multimedia content to be cached, or determine, based on a selection of the user, the multimedia content to be cached, or determine, based on the itinerary information, the multimedia content to be cached, for example, cache the multimedia content related to the end location of the travel of the user. This is not limited in embodiments of this application.

In addition, it should be noted that, in the travel scenario 3, because the electronic device 100 plays the cached multimedia content while playing the cached multimedia content, the electronic device 100 does not need to determine the multimedia content to be cached. After determining the cache size, the electronic device 100 may directly cache a part of content that is not subsequently played and that is in the multimedia content currently played by the user.

In some embodiments, the multimedia content to be cached may be specifically determined by the multimedia application of the electronic device 100. In this case, the electronic device 100 may send the cache size of the multimedia content to the multimedia application, and the multimedia application determines the multimedia content that conforms to the cache size. In other words, the electronic device 100 may determine, by using the multimedia application, the multimedia content to be cached. Specifically, the multimedia application may determine, based on the historical browsing record of the user for the multimedia content, multimedia content that may be of interest to the user. A movie is used as an example. It is assumed that the user watches a movie of a war type most frequently in the multimedia application, the multimedia application may determine that the movie of the war type is the multimedia content that may be of interest to the user, and the multimedia application may select a movie of the war type that has not been watched for caching.

Further, when the electronic device 100 includes a plurality of multimedia applications, the electronic device 100 may send a cache request to the plurality of multimedia applications. Cache sizes of the multimedia application cached by different multimedia applications may be the same or different. Preferably, the electronic device 100 may allocate different cache ratios to the different multimedia applications, and the different multimedia applications may start caching the multimedia content based on the respective cache ratios. For example, the electronic device 100 includes a multimedia application 1 and a multimedia application 2, the cache duration of the multimedia content to be cached by the electronic device 100 is two hours, and the electronic device 100 may set a cache ratio of the multimedia application 1 to the multimedia application 2 to 1:3. In this case, cache duration allocated to the multimedia application 1 is 2*1/(1+3)=0.5 hours, and cache duration allocated to the multimedia application 2 is 2*3/(1+3)=1.5 hours. In this case, the multimedia application 1 may cache multimedia content of 0.5 hours duration, and the multimedia application 2 may cache multimedia content of 1.5 hours duration.

In addition, the electronic device 100 may select some multimedia applications from the plurality of multimedia applications as applications to cache the multimedia content. The electronic device 100 may select the multimedia application based on a tapping frequency of the user on the multimedia application. Specifically, the electronic device 100 may select, from different types of multimedia applications, a multimedia application with a highest tapping frequency as an application that needs to cache the multimedia content, for example, select, from short video applications, an application most frequently used by the user, select, from music players, an application most frequently used by the user, and the like.

It may be understood that a size of the multimedia content cached by the multimedia application is not necessarily equal to the cache size determined or allocated by the electronic device 100. In some embodiments, the size of the multimedia content cached by the multimedia application may be greater than the cache size determined by the electronic device 100. A video is used as an example. Some users are accustomed to watching a video at an accelerated speed. In this case, when a video whose length is the same as that of the network unavailable time period is cached, the user may finish watching the video in advance but there is still poor or even no network signal reception. Therefore, the electronic device 100 may preset a fluctuation ratio, so that an actual size of the video cached by the electronic device 100 = the cache size * the fluctuation ratio.

S106: The electronic device 100 starts caching the multimedia content.

Specifically, the electronic device 100 may start caching the multimedia content by using the multimedia application, and locally store the multimedia content. In this way, the user can normally watch the cached multimedia content without additionally using the network.

In some embodiments, the electronic device 100 may start caching the multimedia content by using the smart assistant application. During specific implementation, the smart assistant application may send a cache request carrying cache duration to the multimedia application, and the multimedia application may start caching multimedia content of the specified cache duration in response to the cache request. Further, the smart assistant application may send the cache request carrying the cache duration to the multimedia application based on the network status. In other words, the smart assistant application may send the cache request carrying the cache duration to the multimedia application when the network signal strength reaches the threshold. In this way, the electronic device 100 can avoid caching the multimedia content during poor network signal reception. This ensures that the electronic device 100 can complete caching the multimedia content as soon as possible during good network signal reception, and frees a download task of the multimedia content from occupying system resources. Alternatively, the smart assistant application may start caching the multimedia content when the network type is the Wi-Fi network. In this way, consumption of a mobile network traffic tariff can be avoided.

In some embodiments, in a process in which the electronic device 100 starts caching the multimedia content, the electronic device 100 may display the caching process on the user interface for the user to view the caching process of the multimedia content.

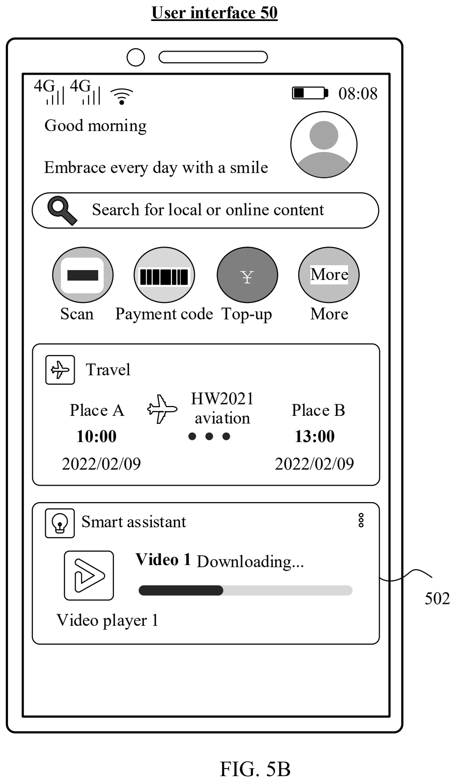

For example, after the electronic device 100 obtains the itinerary information of the user, the electronic device 100 may start caching the multimedia content based on the itinerary information, that is, display the user interface 50 shown in FIG. 5B.

As shown in FIG. 5B, the user interface 50 further includes a second notification bar 502. The second notification bar 502 may be a notification message provided by the smart assistant application. The second notification bar 502 is used to display a caching progress of the multimedia content on the electronic device 100. In the second notification bar 502 shown in FIG. 5B, the multimedia content may be a video, and the video may be cached by the electronic device 100 by using the video player 1 application.

It should be noted that, the caching progress displayed in the second notification bar 502 may be provided by the multimedia application that caches the multimedia content, for example, the video player 1 application, in addition to the smart assistant application. This is not limited in embodiments of this application.

It may be understood that a form of the multimedia content is not limited in embodiments of this application. In addition to the video shown in FIG. 5B, the multimedia content may be content like an audio and a text. In this case, a multimedia application that performs caching may be a music player, a novel reader, or the like. This is not limited in embodiments of this application.

In addition, after the electronic device 100 completes caching the multimedia content, the electronic device 100 may display, on the user interface, an option corresponding to the cached multimedia content. The option may be used to trigger an operation performed on the multimedia content. For example, if the multimedia content is a video, when detecting a user operation performed by the user on the option, the electronic device 100 plays the multimedia content in response to the operation. In this way, when the user needs to watch the multimedia content, the user can watch the multimedia content through the user interface in time, and quickly and conveniently display a playing interface of the multimedia content.

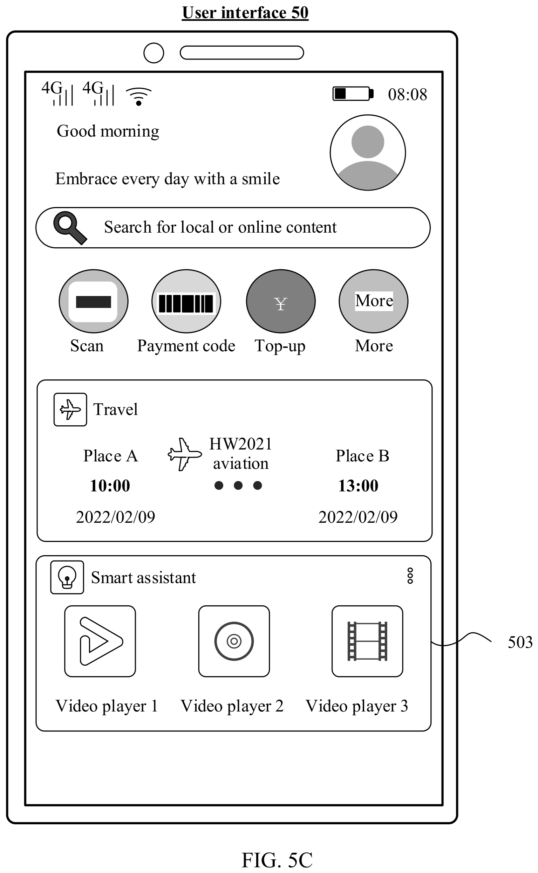

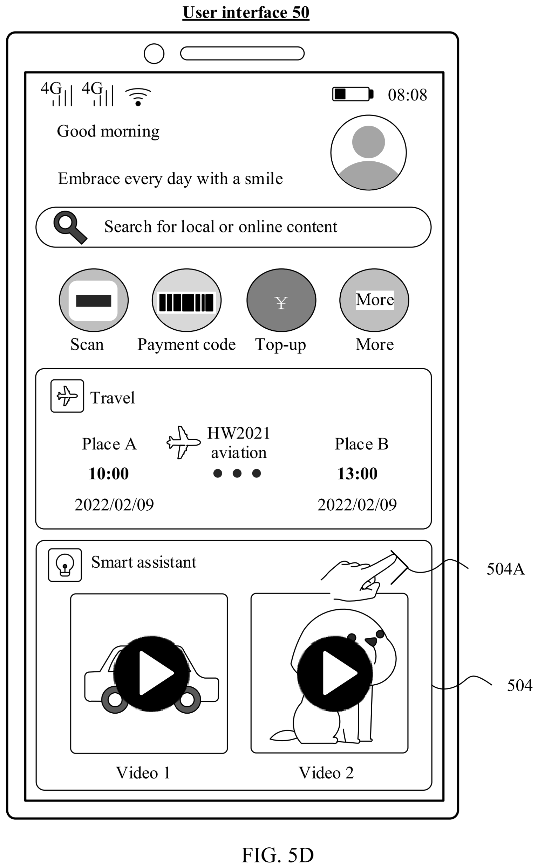

For example, after completing caching the multimedia content, the electronic device 100 may display the user interface 50 shown in FIG. 5C or FIG. 5D.

As shown in FIG. 5C, the user interface 50 may include a third notification bar 503, and the third notification bar 503 may be obtained by updating the second notification bar 502 shown in FIG. 5B. Specifically, after completing caching the multimedia content, the electronic device 100 may update the second notification bar 502 shown in FIG. 5B to the third notification bar 503 shown in FIG. 5C, so that the user browses the cached multimedia content. The third notification bar 503 may include icons of one or more multimedia applications when the electronic device 100 caches the multimedia content by using the one or more multimedia applications. User operations on the one or more icons may be detected, and in response to the user operations, user interfaces provided by multimedia applications corresponding to the icons are displayed, so that the user watches the multimedia content cached in the multimedia applications. For example, icons of three multimedia applications may be displayed in the third notification bar 503 shown in FIG. 5C, and the three multimedia applications are respectively a "video player 1", a "video player 2", and a "video player 3".

As shown in FIG. 5D, the user interface 50 may include a fourth notification bar 504, and the fourth notification bar 504 may be obtained by updating the second notification bar 502 shown in FIG. 5B. Specifically, after completing caching the multimedia content, the electronic device 100 may update the second notification bar 502 shown in FIG. 5B to the fourth notification bar 504 shown in FIG. 5D, so that the user browses the cached multimedia content. The fourth notification bar 504 may include one or more pieces of multimedia content cached by the electronic device 100. User operations on the one or more pieces of multimedia content may be detected, and in response to the user operations, a playing interface of the multimedia content is displayed. For example, two pieces of multimedia content may be displayed in the fourth notification bar 504 shown in FIG. 5D, and the two pieces of multimedia content are respectively a "video 1" and a "video 2".

Optionally, the electronic device 100 may not display a caching process of the multimedia content. To be specific, after displaying the user interface 50 shown in FIG. 5A, the electronic device 100 completes caching the multimedia content, and directly displays the user interface 50 shown in FIG. 5C or FIG. 5D. In addition, the user interface 50 shown in FIG. 5C or FIG. 5D may be displayed after the electronic device 100 completes caching the multimedia content, or may be displayed when the electronic device 100 detects that the user arrives at the start location of the travel or a current time reaches the travel time. When the electronic device 100 displays the cached multimedia content is not limited in embodiments of this application.

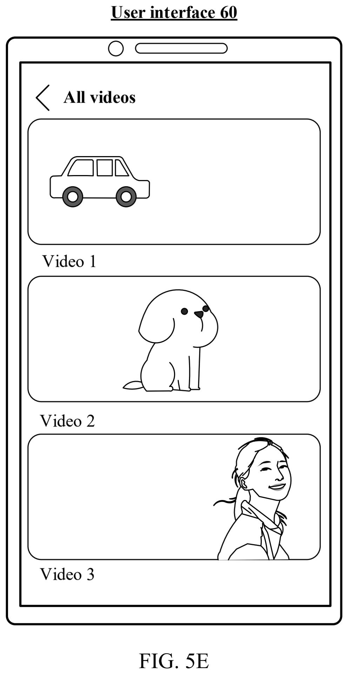

In addition, the fourth notification bar 504 shown in FIG. 5D may include a more control 504A. When the electronic device 100 detects a user operation performed on the more control 504A, the electronic device 100 may display a user interface 60 shown in FIG. 5E in response to the user operation.

As shown in FIG. 5E, the user interface 60 may be used to display one or more pieces of multimedia content cached by the electronic device 100. The electronic device 100 may detect a slide-up or slide-down operation performed by the user on the user interface 60, to display more multimedia content. In addition, user operations on the one or more pieces of multimedia content may be detected, and in response to the operation, the multimedia content is expanded or played.

For example, in diagrams of the user interfaces shown in FIG. 5D and FIG. 5E, the "video 1", the "video 2", or more other multimedia content displayed by the electronic device 100 may display a dynamic picture, and the picture may be a clipped picture in the video. In this way, before watching the multimedia content, the user may learn the multimedia content in advance by using the clipped picture, so as to help the user select a most desired piece of multimedia content from a plurality of pieces of multimedia content more quickly.

It can be learned from FIG. 5A to FIG. 5E that, after the electronic device 100 enables the intelligent cache function, the electronic device 100 may automatically cache the multimedia content based on the itinerary information, to meet an entertainment requirement of the user during the travel. In addition, the electronic device 100 may further display the itinerary information and the caching process of the multimedia content on the user interface, so that the user can easily learn and view a travel status of the user and a cache status of the multimedia content.

S107: The electronic device 100 starts an operation on the multimedia content.

That the electronic device 100 starts the operation on the multimedia content may be outputting the multimedia content, to meet an entertainment requirement of the user in the travel process. For example, when the multimedia content is a video, the operation performed by the electronic device 100 on the multimedia content may be displaying the playing interface of the multimedia content and starting to play the multimedia content. After completing caching the multimedia content, the electronic device 100 may start the operation on the multimedia content in the following two cases:
(1) The user operation performed on the option corresponding to the multimedia content is received, and in response to the operation, the operation on the multimedia content is started.
(2) The electronic device 100 may start the operation on the multimedia content when detecting that the electronic device 100 is in a preset state, for example, in the airplane mode, or in the travel process.

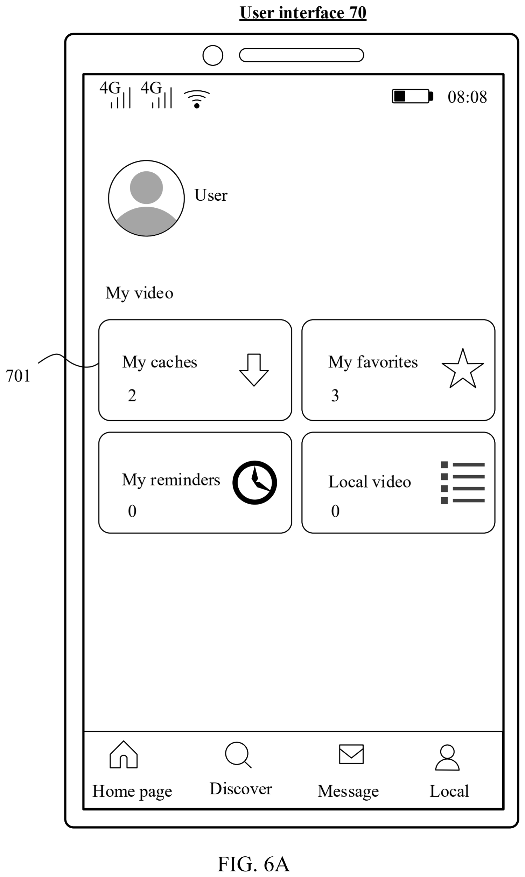

For example, FIG. 6A to FIG. 6B show examples of some user interfaces involved when the electronic device 100 plays the multimedia content offline after completing caching the multimedia content.

FIG. 6A shows an example of a user interface 70 provided by the video player 1 application when the electronic device 100 runs the video player 1 application. For example, the user interface 70 may be a user interface displayed after the electronic device 100 detects an operation performed by the user on the video player 1 icon 104B shown in FIG. 4A.

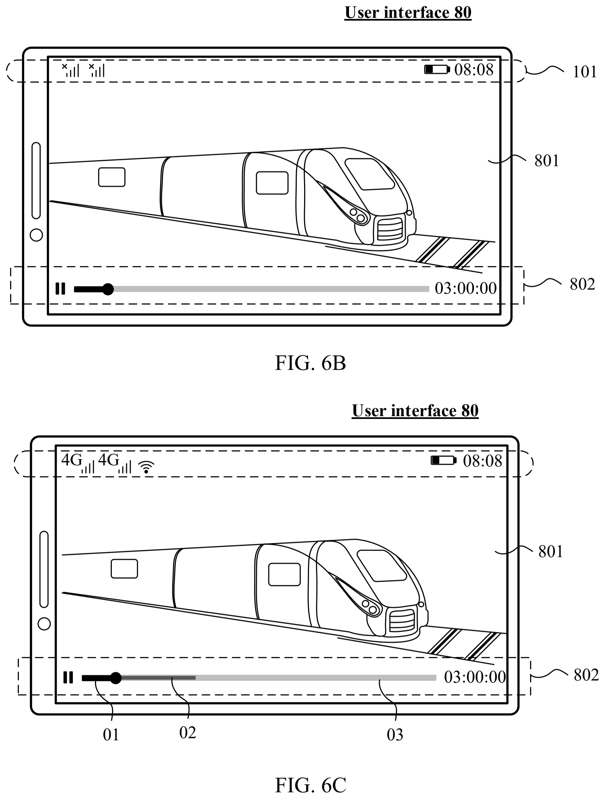

As shown in FIG. 6A, the user interface 70 is used to display a video cached and managed by the video player 1. The user interface 70 may include a first option 701, and the first option 701 may be used to trigger display of the video cached in the video player 1, and display a video playing interface of the video after receiving a play operation performed by the user on the video. For example, the video playing interface may be a user interface 80 shown in FIG. 6B.

As shown in FIG. 6B, the user interface 80 may include the status bar 101, a preview box 801, and a playing progress bar 802. The status bar 101 may include a network signal strength indicator, a battery status indicator, and a time indicator. The status bar 101 indicates that there is no network signal reception on the electronic device 100 currently. The preview box 801 may be used to display a video picture, and the playing progress bar 802 may be used to display a playing progress, and control pause and play of the video. In addition, the playing progress bar 802 further indicates that duration of the currently played video is three hours, which is consistent with the travel duration of the user in the itinerary information shown in FIG. 5A.

With reference to FIG. 5A and FIG. 6B, it can be learned that when the electronic device 100 obtains a three-hour flight itinerary from 10:00 to 13:00 of the user, the electronic device 100 caches a video whose duration is three hours before 10:00, so that the user can watch a video whose duration is almost the same as itinerary duration during the travel. This avoids that the user cannot use a mobile phone to kill time during the travel in which there is no network signal reception.

It may be understood that duration of the video cached by the electronic device 100 may alternatively be less than the travel duration of the user. Specifically, the electronic device 100 may further determine a network unavailable time period that may occur on the itinerary of the user, to provide a more precise pre-cache policy for the user. For example, it is assumed that the user reserves a three-hour train itinerary. However, in the itinerary process, network signal reception is poor only in a time period for passing through a tunnel for half an hour. Therefore, the electronic device 100 may cache only a video of about half an hour for the user to watch during the itinerary. In addition, the duration of the video cached by the electronic device 100 may alternatively be greater than the itinerary duration of the user. This is because if the user has a habit of watching a video at an accelerated speed, the electronic device 100 may cache, based on the habit for the user, a video whose duration is longer than the itinerary duration or network unavailable duration, to meet the entertainment requirement of the user in the itinerary.

In addition, the electronic device 100 can cache the multimedia content like an audio and a text in addition to a video. Similar to the video, a cache size of the audio may be calculated based on audio duration and the travel duration, and a cache size of the text may be calculated based on a reading speed of the user and the travel duration. For example, if the reading speed of the user is 2,000 words per minute, when the user has a one-hour itinerary, the electronic device 100 may pre-cache an e-book of about 10,000 words.

It should be noted that, when displaying the user interfaces shown in FIG. 5C to FIG. 5E, the electronic device 100 may receive an operation performed by the user on one piece of cached multimedia content, and display the user interface shown in FIG. 6A or FIG. 6B, so that the user quickly opens a playing interface of the multimedia content.

In some other embodiments, that the electronic device 100 outputs the multimedia content may mean that after outputting a part of the multimedia content, the electronic device 100 outputs another part of the multimedia content. The another part of the multimedia content is a part of content pre-cached by the electronic device based on a cache size. This is because in some travel scenarios, signal reception of the electronic device 100 may be unstable due to fast movement of the electronic device 100. In this case, the electronic device 100 may predict a future network unavailable time period in a process in which the user watches or listens to the multimedia content online, and pre-cache a second half of the multimedia content that is currently watched or listened to during good network signal reception. This ensures that the user does not experience frame freezing during online watching or listening despite poor or even no network signal reception.

For example, as shown in FIG. 6C, the status bar 101 indicates that there is good network signal reception on the electronic device 100 currently, a video picture played online by the electronic device 100 is displayed in the preview box 801, and played duration of the video, cache duration of the video, and total video duration are displayed in the playing progress bar 802. The played duration may be a length indicated by a line 01, the cache duration may be a length indicated by a line 02, and the total video duration may be a length indicated by the line 01 + the line 02 + a line 03. During specific implementation, the electronic device 100 may predict, in a current playing process, that a next half hour is a network unavailable time period. Therefore, currently, the electronic device 100 may pre-cache a video progress of half an hour at a current playing progress. This avoids a problem that the user experiences frame freezing during playing or listening of the multimedia content when the network is missing, and improves user experience.

In some embodiments, when detecting that the end location of the travel has been reached and/or the playing interface of the multimedia content has been exited, the electronic device 100 displays prompt information to prompt the user to delete the multimedia content cached for the current travel, or automatically deletes the multimedia content cached for the current travel. Further, after deleting the multimedia content, the electronic device 100 may display prompt information to prompt the user that the multimedia content cached for the current travel has been deleted.

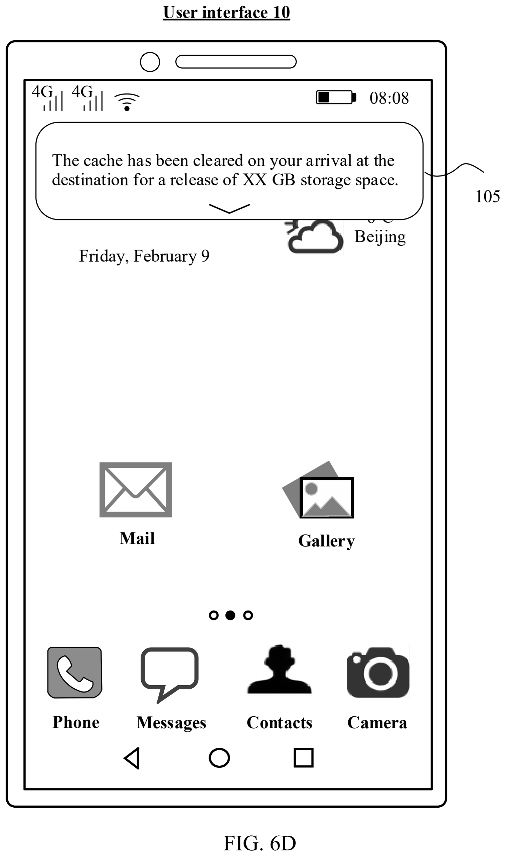

For example, as shown in FIG. 6D, the electronic device 100 may display prompt information 105 after completing deletion of the multimedia content. The prompt information 105 is used to prompt the user that the destination has been reached and the cached multimedia content has been cleared, thereby releasing storage space.

In general, the method provided in embodiments of this application can be applied to a plurality of travel scenarios of the user. The travel scenario may be a scenario of taking a flight, a train, a high-speed train, a subway, or the like. Before or during the travel of the user, the electronic device 100 may pre-cache the multimedia content based on the itinerary information of the user, to ensure that the user has multimedia content that can be watched offline despite poor or even no network signal reception. This meets the entertainment requirement of the user during the travel, and improves user experience.

It should be noted that FIG. 4A to FIG. 4D, FIG. 5A to FIG. 5E, and FIG. 6A to FIG. 6D are merely examples of user interfaces provided in embodiments of this application, and do not constitute a limitation on embodiments of this application.

The implementations of this application may be randomly combined to achieve different technical effects.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.
Further embodiments of the present invention are provided in the following. It should be noted that the numbering used in the following section does not necessarily need to comply with the numbering used in the previous sections.
Embodiment 1. A pre-caching method, wherein the method comprises:
   obtaining, by an electronic device, itinerary information;
   determining, by the electronic device, first duration based on the itinerary information;
   obtaining and storing, by the electronic device, first content based on the first duration; and
   displaying, by the electronic device, a first user interface, wherein the first user interface comprises a first option corresponding to the first content, and the first option is used to perform an operation on the first content.
Embodiment 2. The method according to embodiment 1, wherein the determining, by the electronic device, first duration based on the itinerary information specifically comprises:
   determining, by the electronic device, a travel road section of a user based on the itinerary information;
   determining, from the travel road section by the electronic device, a first road section whose network signal strength is less than a first threshold; and
   determining, by the electronic device, the first duration for the user to pass through the first road section.
Embodiment 3. The method according to embodiment 2, wherein before the determining, from the travel road section by the electronic device, a first road section whose network signal strength is less than a first threshold, the method further comprises:
   sending, by the electronic device, the itinerary information to a server; and
   receiving, by the electronic device, network signal strength that is of the travel road section and that is sent by the server; and
   the determining, from the travel road section by the electronic device, a first road section whose network signal strength is less than a first threshold specifically comprises:
      determining, from the travel road section by the electronic device based on the network signal strength of the travel road section and the first threshold, the first road section whose network signal strength is less than the first threshold.
Embodiment 4. The method according to embodiment 2 or 3, wherein the method further comprises:
   determining, by the electronic device, a travel time of the user based on the itinerary information; and
   the determining, by the electronic device, the first duration for the user to pass through the first road section comprises: determining, by the electronic device, the first duration for the user to pass through the first road section within the travel time.
Embodiment 5. The method according to any one of embodiments 1 to 4, wherein the method further comprises:
   displaying, by the electronic device, the first content when receiving a first operation performed on the first option or when detecting that the electronic device is in a preset state.
Embodiment 6. The method according to any one of embodiments 1 to 5, wherein before the obtaining, by an electronic device, itinerary information, the method further comprises:
   displaying, by the electronic device, a second user interface that is provided by a settings application and that comprises a second option; and
   receiving, by the electronic device, a second operation performed on the second option, wherein the second operation is used to trigger the electronic device to obtain the itinerary information and store the first content.
Embodiment 7. The method according to any one of embodiments 1 to 6, wherein the method further comprises:
   removing, by the electronic device, the first content from storage space after the electronic device detects a third operation or the electronic device detects that the electronic device arrives at a destination; and
   displaying, by the electronic device, prompt information, wherein the prompt information indicates that the electronic device already removes the first content from the storage space.
Embodiment 8. The method according to any one of embodiments 1 to 7, wherein the obtaining and storing, by the electronic device, first content based on the first duration specifically comprises:
   when a network status meets a preset condition, obtaining and storing, by the electronic device, the first content based on the first duration, wherein the preset condition comprises: network signal strength of the electronic device is greater than a second threshold, and/or a network type of the electronic device is a first type.
Embodiment 9. A pre-caching method, wherein the method comprises:
   obtaining, by an electronic device, itinerary information, wherein the itinerary information indicates a travel road section of a user;
   outputting, by the electronic device at a first location on the travel road section, a first part of first content online;
   determining, by the electronic device, network signal strength of a first road section following the first location from the travel road section, wherein the first road section starts from the first location;
   when the network signal strength of the first road section is less than a first threshold, storing, by the electronic device, a second part of the first content, wherein the second part is determined based on duration for the user to pass through the first road section; and
   outputting, by the electronic device, the second part of the first content after outputting the first part of the first content.
Embodiment 10. The method according to embodiment 9, wherein the determining, by the electronic device, network signal strength of a first road section following the first location from the travel road section specifically comprises:
   sending, by the electronic device, a first request to a server, wherein the first request is used to request to obtain the network signal strength of the first road section; and
   receiving, by the electronic device, the network signal strength that is of the first road section and that is sent by the server.
Embodiment 11. The method according to embodiment 9 or 10, wherein the itinerary information further comprises a travel time of the user, and duration of the second part is determined based on the duration for the user to pass through the first road section within the travel time.
Embodiment 12. The method according to any one of embodiments 9 to 11, wherein before the obtaining, by an electronic device, itinerary information, the method further comprises:
   displaying, by the electronic device, a first user interface that is provided by a settings application and that comprises a first option; and
   receiving, by the electronic device, a first operation performed on the first option, wherein the first operation is used to trigger the electronic device to obtain the itinerary information and store the second part of the first content.
Embodiment 13. An electronic device, comprising a display, a memory, and one or more processors, wherein the display and the memory are coupled to the one or more processors, the memory is configured to store computer program code, the computer program code comprises computer instructions, and the one or more processors invoke the computer instructions to enable the electronic device to perform the following operations:
   obtaining, by a first application of the electronic device, itinerary information;
   determining, by a second application of the electronic device, first duration based on the itinerary information;
   obtaining and storing, by the second application of the electronic device, first content based on the first duration; and
   displaying, by the electronic device, a first user interface, wherein the first user interface comprises a first option corresponding to the first content, and the first option is used to perform an operation on the first content.
Embodiment 14. The electronic device according to embodiment 13, wherein the one or more processors are specifically configured to invoke the computer instructions, to enable the electronic device to perform the following operations:
   determining, by the first application of the electronic device, a travel road section of a user based on the itinerary information;
   determining, from the travel road section by the first application of the electronic device, a first road section whose network signal strength is less than a first threshold; and
   determining, by the first application of the electronic device, the first duration for the user to pass through the first road section.
Embodiment 15. The electronic device according to embodiment 14, wherein the one or more processors are further configured to invoke the computer instructions, to enable the electronic device to perform the following operations:
   before the first application of the electronic device determines the first road section, sending, by the first application of the electronic device, the itinerary information to a server; and
   receiving, by the first application of the electronic device, the network signal strength that is of the travel road section and that is sent by the server; and
   the one or more processors are specifically configured to invoke the computer instructions, to enable the electronic device to perform the following operation:
      determining, from the travel road section by the first application of the electronic device based on the network signal strength of the travel road section and the first threshold, the first road section whose network signal strength is less than the first threshold.
Embodiment 16. The electronic device according to embodiment 14 or 15, wherein the one or more processors are further configured to invoke the computer instructions, to enable the electronic device to perform the following operation:
   determining, by the first application of the electronic device, a travel time of the user based on the itinerary information; and
   the one or more processors are specifically configured to invoke the computer instructions, to enable the electronic device to perform the following operation:
      determining, by the first application of the electronic device, the first duration for the user to pass through the first road section within the travel time.
Embodiment 17. The electronic device according to any one of embodiments 13 to 16, wherein the one or more processors are further configured to invoke the computer instructions, to enable the electronic device to perform the following operation:
   displaying, by the second application of the electronic device, the first content when receiving a first operation performed on the first option or when detecting that the electronic device is in a preset state.
Embodiment 18. The electronic device according to any one of embodiments 13 to 17, wherein the one or more processors are further configured to invoke the computer instructions, to enable the electronic device to perform the following operations:
   before the first application of the electronic device obtains the itinerary information, displaying, by the electronic device, a second user interface that is provided by a settings application and that comprises a second option, and receiving a second operation performed on the second option, wherein the second operation is used to trigger the electronic device to obtain the itinerary information and store the first content.
Embodiment 19. The electronic device according to any one of embodiments 13 to 18, wherein the one or more processors are further configured to invoke the computer instructions, to enable the electronic device to perform the following operations:
   removing, by the first application of the electronic device, the first content from storage space after the first application of the electronic device detects a third operation or the first application of the electronic device detects that the electronic device arrives at a destination; and
   displaying, by the first application of the electronic device, prompt information, wherein the prompt information indicates that the electronic device already removes the first content from the storage space.
Embodiment 20. The electronic device according to any one of embodiments 13 to 19, wherein the one or more processors are specifically configured to invoke the computer instructions, to enable the electronic device to perform the following operations:
   when a network status meets a preset condition, obtaining and storing, by the second application of the electronic device, the first content based on the first duration, wherein the preset condition comprises: network signal strength of the electronic device is greater than a second threshold, and/or a network type of the electronic device is a first type.
Embodiment 21. An electronic device, comprising a display, a memory, and one or more processors, wherein the display and the memory are coupled to the one or more processors, the memory is configured to store computer program code, the computer program code comprises computer instructions, and the one or more processors invoke the computer instructions to enable the electronic device to perform the following operations:
   obtaining, by a first application of the electronic device, itinerary information, wherein the itinerary information indicates a travel road section of a user;
   outputting, by a second application of the electronic device at a first location on the travel road section, a first part of first content online;
   determining, by the first application of the electronic device, network signal strength of a first road section following the first location from the travel road section, wherein the first road section starts from the first location;
   when the network signal strength of the first road section is less than a first threshold, caching, by the second application of the electronic device, a second part of the first content, wherein the second part is determined based on duration for the user to pass through the first road section; and
   outputting, by the second application of the electronic device, the second part of the first content after outputting the first part of the first content.
Embodiment 22. The electronic device according to embodiment 21, wherein the one or more processors are specifically configured to invoke the computer instructions, to enable the electronic device to perform the following operations:
   sending, by the first application of the electronic device, a first request to a server, wherein the first request is used to request to obtain the network signal strength of the first road section; and
   receiving, by the first application of the electronic device, the network signal strength that is of the first road section and that is sent by the server.
Embodiment 23. The electronic device according to embodiment 21 or 22, wherein the itinerary information further comprises a travel time of the user, and duration of the second part is determined based on the duration for the user to pass through the first road section within the travel time.
Embodiment 24. The electronic device according to any one of embodiments 21 to 23, wherein the one or more processors are specifically configured to invoke the computer instructions, to enable the electronic device to perform the following operations:
   before the first application of the electronic device obtains the itinerary information, displaying, by the electronic device, a first user interface that is provided by the first application and that comprises a first option; and
   receiving, by the first application of the electronic device, a first operation performed on the first option, wherein the first operation is used to trigger the electronic device to obtain the itinerary information and cache the second part of the first content.
Embodiment 25. A computer-readable storage medium, comprising instructions, wherein when the instructions are run on an electronic device, the electronic device is enabled to perform the method according to any one of embodiments 1 to 8 and embodiments 9 to 12.
Embodiment 26. A computer program product, wherein when the computer program product runs on a computer, the computer is enabled to perform the method according to any one of embodiments 1 to 8 and embodiments 9 to 12.

A person of ordinary skill in the art may understand that all or some of the procedures of the methods in embodiments may be implemented by a computer program instructing relevant hardware. The program may be stored in a computer-readable storage medium. When the program runs, the procedures of the methods in embodiments are performed. The foregoing storage medium includes any medium that can store program code, like a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A pre-caching method, wherein the method comprises:
obtaining, by an electronic device, itinerary information;
determining, by the electronic device, first duration based on the itinerary information;
obtaining and storing, by the electronic device, first content based on the first duration; and
displaying, by the electronic device, a first user interface, wherein the first user interface comprises a first option corresponding to the first content, and the first option is used to perform an operation on the first content.

2. The method according to claim 1, wherein the determining, by the electronic device, first duration based on the itinerary information specifically comprises:
determining, by the electronic device, a travel road section of a user based on the itinerary information;
determining, from the travel road section by the electronic device, a first road section whose network signal strength is less than a first threshold; and
determining, by the electronic device, the first duration for the user to pass through the first road section.

3. The method according to claim 2, wherein before the determining, from the travel road section by the electronic device, a first road section whose network signal strength is less than a first threshold, the method further comprises:
sending, by the electronic device, the itinerary information to a server; and
receiving, by the electronic device, network signal strength that is of the travel road section and that is sent by the server; and
the determining, from the travel road section by the electronic device, a first road section whose network signal strength is less than a first threshold specifically comprises:
determining, from the travel road section by the electronic device based on the network signal strength of the travel road section and the first threshold, the first road section whose network signal strength is less than the first threshold.

4. The method according to claim 2 or 3, wherein the method further comprises:
determining, by the electronic device, a travel time of the user based on the itinerary information; and
the determining, by the electronic device, the first duration for the user to pass through the first road section comprises: determining, by the electronic device, the first duration for the user to pass through the first road section within the travel time.

5. The method according to any one of claims 1 to 4, wherein the method further comprises:
displaying, by the electronic device, the first content when receiving a first operation performed on the first option or when detecting that the electronic device is in a preset state.

6. The method according to any one of claims 1 to 5, wherein before the obtaining, by an electronic device, itinerary information, the method further comprises:
displaying, by the electronic device, a second user interface that is provided by a settings application and that comprises a second option; and
receiving, by the electronic device, a second operation performed on the second option, wherein the second operation is used to trigger the electronic device to obtain the itinerary information and store the first content.

7. The method according to any one of claims 1 to 6, wherein the method further comprises:
removing, by the electronic device, the first content from storage space after the electronic device detects a third operation or the electronic device detects that the electronic device arrives at a destination; and
displaying, by the electronic device, prompt information, wherein the prompt information indicates that the electronic device already removes the first content from the storage space.

8. The method according to any one of claims 1 to 7, wherein the obtaining and storing, by the electronic device, first content based on the first duration specifically comprises:
when a network status meets a preset condition, obtaining and storing, by the electronic device, the first content based on the first duration, wherein the preset condition comprises: network signal strength of the electronic device is greater than a second threshold, and/or a network type of the electronic device is a first type.

9. A pre-caching method, wherein the method comprises:
obtaining, by an electronic device, itinerary information, wherein the itinerary information indicates a travel road section of a user;
outputting, by the electronic device at a first location on the travel road section, a first part of first content online;
determining, by the electronic device, network signal strength of a first road section following the first location from the travel road section, wherein the first road section starts from the first location;
when the network signal strength of the first road section is less than a first threshold, storing, by the electronic device, a second part of the first content, wherein the second part is determined based on duration for the user to pass through the first road section; and
outputting, by the electronic device, the second part of the first content after outputting the first part of the first content.

10. The method according to claim 9, wherein the determining, by the electronic device, network signal strength of a first road section following the first location from the travel road section specifically comprises:
sending, by the electronic device, a first request to a server, wherein the first request is used to request to obtain the network signal strength of the first road section; and
receiving, by the electronic device, the network signal strength that is of the first road section and that is sent by the server.

11. The method according to claim 9 or 10, wherein the itinerary information further comprises a travel time of the user, and duration of the second part is determined based on the duration for the user to pass through the first road section within the travel time.

12. The method according to any one of claims 9 to 11, wherein before the obtaining, by an electronic device, itinerary information, the method further comprises:
displaying, by the electronic device, a first user interface that is provided by a settings application and that comprises a first option; and
receiving, by the electronic device, a first operation performed on the first option, wherein the first operation is used to trigger the electronic device to obtain the itinerary information and store the second part of the first content.

13. An electronic device, comprising a display, a memory, and one or more processors, wherein the display and the memory are coupled to the one or more processors, the memory is configured to store computer program code, the computer program code comprises computer instructions, and the one or more processors invoke the computer instructions to enable the electronic device to perform the method according to any one of claims 1 to 12.

14. A computer-readable storage medium, comprising instructions, wherein when the instructions are run on an electronic device, the electronic device is enabled to perform the method according to any one of claims 1 to 12.
